# EUROPEAN PATENT SPECIFICATION

(11) **EP 3 844 702 B1**
(45) Date of publication and mention of the grant of the patent: **30.04.2025**
(21) Application number: 19854586.5
(22) Date of filing: 29.08.2019
(51) Int. Cl.: G06Q 20/06, G06Q 20/10, G06Q 40/00, G06Q 50/10, G06Q 30/06, G06Q 20/40, H04L 9/00, H04L 9/32

(54) **TRACING CRYPTOCURRENCIES**
VERFOLGUNG VON KRYPTOWÄHRUNGEN
TRAÇAGE DE CRYPTOMONNAIES

(30) Priority: 29.08.2018 US 201862724192 P
(43) Date of publication of application: 07.07.2021
(73) Proprietor: G.B. Bittax Ltd, 6423902 Tel Aviv (IL)
(72) Inventor: BAR ZAKAY, Gidon, 6423902 Tel Aviv (IL)
(74) Representative: Fry, David John
(86) International application number: PCT/IL2019/050977
(87) International publication number: WO 2020/044350

(56) References cited:
- CN-A- 106 503 053
- US-A1- 2012 016 796
- US-A1- 2015 294 425
- US-A1- 2017 046 651
- US-A1- 2017 046 670

## Description

### CROSS-REFERENCE TO RELATED APPLICATION

This application claims the benefit of provisional patent application No. 62/724,192 filed August 29, 2018.

### TECHNICAL FIELD

The present disclosure relates to currency transfers involving cryptocurrency in general, and to systems, products, and methods for tracing cryptocurrencies on a blockchain, in particular.

### BACKGROUND

Most electronic transactions use government supported currencies. Several virtual currencies have surfaced in recent years which offer an alternative to government regulated currencies. Such virtual currencies are not issued by centralized authorities. Instead, virtual currencies are regulated by cryptographic methods which manage and control the currency.

Keeping track of transferrable ownership rights historically required a central record that is trusted by those exchanging ownership rights. The record typically records all valid property transfers to maintain a record of the current state of ownership. There are times, however, when relying on a central authority is not desirable. US 2015/294425 A1 discloses a system for determining a taxable income based on an evaluation of virtual currency transactions. The system categorizes incoming and outgoing transactions as purchase, sale or transfer transactions. The taxable purchase and sale transactions are analysed in order to determine the cost in fiat currency of the virtual currency of the transaction on the date the virtual currency is received at one of the user wallets and further determine the income tax based on the differences of costs and transaction values of the respective transactions.

US 2012/016796 A1 relates to a system for monitoring transactions involving virtual currency in order to detect potentially fraudulent transactions. The system evaluates a transaction by identifying user-identifying information which is used to determine persons related to the user from a social graph and assesses whether previous fraudulent activities were performed by the user. In case an elevated risk of fraud of the user is determined, tracked virtual currency is used to monitor the virtual currency transaction, said tracked virtual currency being associated with the user by using a mapping table.

US 2017/046651 A1 discloses a system for tracking events on a blockchain. The system decrypts a portion of blockchain data into event-related data using a first cryptographic key and another portion of blockchain data into rule data using a second cryptographic key. The rules are used for performing operations related to the events, such as disbursements of rewards.

US 2017/046670 A1 relates to a computer-implemented transaction processing system wherein a transaction is performed under the conditions of a set of predefined rules, such as geographical constraints of the transaction or requirements regarding photographic evidence associated with the acquisition of goods or services.

CN 106 503 053 A discloses a system for verifying unspent transaction outputs (UTXO) in a Bitcoin blockchain. The system stores the information about spendable UTXO in a database in form of a mapping of transaction identifiers to UTXO and provides upon receiving a request comprising a transaction identifier and an output index from a payment verifying node a query success or failure response.

### BRIEF SUMMARY

One exemplary embodiment of the disclosed subject matter is a method comprising: obtaining user information indicating one or more addresses of a user; detecting one or more transactions of the user in a blockchain history based on the user information, wherein the blockchain history is obtained in one or more transmissions from a remote server; identifying, in the one or more transactions of the user, a subgroup of outputs, wherein each output of the subgroup of outputs is associated with one of the one or more addresses of the user; classifying, by a computer, cryptocurrencies associated with respective outputs of the subgroup of outputs as internally transferred cryptocurrencies or externally transferred cryptocurrencies based on a correlation between the user information and inputs of the one or more transactions, wherein externally transferred cryptocurrencies are transferred from a third party to the user, wherein internally transferred cryptocurrencies are transferred from the user and to the user; obtaining a first cost value of a first externally transferred cryptocurrency associated with a first output of a first transaction, wherein the subgroup of outputs comprises the first output; identifying, in the one or more transactions of the user, a second transaction that has a first input that corresponds to the first output of the first transaction; and computing a second cost value of an output of the second transaction that is associated with the user information to proportionally correspond to the first cost value.

A cost value of the first input may be determined to be identical to the first cost value.

Cryptocurrency activities of the user may be monitored, and, upon detecting a new transaction initiated by the user, a cost value of an output of the new transaction that belongs to the user may be determined based on determined cost values of inputs to the new transaction.

Optionally, cryptocurrency activities of the user may be monitored, and, upon detecting a new transaction initiated by a third party, a cost value of an output of the new transaction that belongs to the user may be determined based on a timestamp of the new transaction.

Cryptocurrencies associated with an output of a transaction of the one or more transactions may be classified as internally transferred cryptocurrencies when inputs to the transaction are associated with the user information.

Optionally, upon receiving a new indication that the output of the transaction of the one or more transactions does not belong to the user, reclassifying transactions that are associated with the transaction of the one or more transactions based on the new indication.

Optionally, cryptocurrencies associated with an output of a transaction of the one or more transactions may be classified as externally transferred cryptocurrencies when all inputs to the transaction are not associated with the one or more addresses of the user.

Optionally, upon receiving a new indication that the output of the transaction of the one or more transactions belongs to the user, reclassifying transactions that are associated with the transaction of the one or more transactions based on the new indication.

Optionally, said obtaining the cost value is based on a quotation from a quotation server that takes into account a timestamp of the first transaction or based on an input from the user that indicates an actual payment.

The ser information further indicates a wallet address and optionally at least one of the group consisting of: a transaction identifier associated with the user, one or more identified inputs or outputs of a transaction that belong to the user and exchange data.

The one or more outputs comprise one or more Unspent Transaction Outputs (UTXOs).

Each cryptocurrency of the user may be retained in at least one database with corresponding determined cost values.

Optionally, each of the one or more transactions of the user may be classified as an internal transaction, a deposit transaction, a withdrawal transaction, a Fiat transaction, a peer to peer (P2P) transaction, an exchange to exchange (Ex-2-Ex) transaction, an alternative cryptocurrency to alternative cryptocurrency (Alt-2-Alt) transaction, or a Mining transaction.

Optionally, upon determining that some information of the user is missing, the user may be prompted to provide additional information to update the user information to include the additional information.

Another exemplary embodiment of the disclosed subject matter is computer program product comprising a non-transitory computer readable storage medium retaining program instructions, which program instructions when read by a processor, cause the processor to perform: obtaining user information indicating one or more addresses of a user; detecting one or more transactions of the user in a blockchain history based on the user information, wherein the blockchain history is obtained in one or more transmissions from a remote server; identifying, in the one or more transactions of the user, a subgroup of outputs, wherein each output of the subgroup of outputs is associated with one of the one or more addresses of the user; classifying, by a computer, cryptocurrencies associated with respective outputs of the subgroup of outputs as internally transferred cryptocurrencies or externally transferred cryptocurrencies based on a correlation between the user information and inputs of the one or more transactions, wherein externally transferred cryptocurrencies are transferred from a third party to the user, wherein internally transferred cryptocurrencies are transferred from the user and to the user; obtaining a first cost value of a first externally transferred cryptocurrency associated with a first output of a first transaction, wherein the subgroup of outputs comprises the first output; identifying, in the one or more transactions of the user, a second transaction that has a first input that corresponds to the first output of the first transaction; and computing a second cost value of an output of the second transaction that is associated with the user information to proportionally correspond to the first cost value.

Yet another exemplary embodiment of the disclosed subject matter is system comprising a processor and coupled memory, the processor being adapted to perform: obtaining user information indicating one or more addresses of a user; detecting one or more transactions of the user in a blockchain history based on the user information, wherein the blockchain history is obtained in one or more transmissions from a remote server; identifying, in the one or more transactions of the user, a subgroup of outputs, wherein each output of the subgroup of outputs is associated with one of the one or more addresses of the user; classifying, by a computer, cryptocurrencies associated with respective outputs of the subgroup of outputs as internally transferred cryptocurrencies or externally transferred cryptocurrencies based on a correlation between the user information and inputs of the one or more transactions, wherein externally transferred cryptocurrencies are transferred from a third party to the user, wherein internally transferred cryptocurrencies are transferred from the user and to the user; obtaining a first cost value of a first externally transferred cryptocurrency associated with a first output of a first transaction, wherein the subgroup of outputs comprises the first output; identifying, in the one or more transactions of the user, a second transaction that has a first input that corresponds to the first output of the first transaction; and computing a second cost value of an output of the second transaction that is associated with the user information to proportionally correspond to the first cost value.

### THE BRIEF DESCRIPTION OF THE SEVERAL VIEWS OF THE DRAWINGS

The present disclosed subject matter will be understood and appreciated more fully from the following detailed description taken in conjunction with the drawings in which corresponding or like numerals or characters indicate corresponding or like components. Unless indicated otherwise, the drawings provide exemplary embodiments or aspects of the disclosure. In the drawings:
Figure 1 shows a schematic illustration of an exemplary environment and architecture in which the disclosed subject matter may be utilized, in accordance with some exemplary embodiments of the disclosed subject matter;
Figure 2 shows a flowchart diagram of a method, in accordance with some exemplary embodiments of the disclosed subject matter;
Figure 3 illustrates transactions in an exemplary scenario, in accordance with some exemplary embodiments of the disclosed subject matter; and
Figure 4 shows a block diagram of an apparatus, in accordance with some exemplary embodiments of the disclosed subject matter.

### DETAILED DESCRIPTION

One technical problem dealt with by the disclosed subject matter is tracing movements of cryptocurrencies that are issued on top of an existing blockchain system. In some cases, it may be required to track cryptocurrencies to detect when they were obtained by a current owner of the cryptocurrencies or by owner at the time taxable activities took place, and what blockchain transaction transferred the cryptocurrencies from a third party to the owner. However, tracing movements of cryptocurrencies between owners may be an extremely difficult task, for example, due to a lack of external personal identification and characteristics of users of a cryptocurrency transaction. An additional complexity may be added since a cryptocurrency may be comprised from a large number of chunks of previously received cryptocurrencies. For example, a single cryptocurrency may be derived from tens and even hundreds of previous transactions. In some cases, a single cryptocurrency may be derived from more than hundreds of previous transactions. A number of transactions and users involved in blockchain transactions is very large and increases over time, which may increase the complexity of finding components of a cryptocurrency even if user identifiers are provided. As of the end of June 2019, the Bitcoin^{™} blockchain has reached approximately 226.6 Gigabytes in size. A naive method of tracking a cryptocurrency by exhaustively going through all transactions to find the cryptocurrency's components may be impractical and time consuming.

Another technical problem dealt with by the disclosed subject matter is tracing movements of cryptocurrencies that are utilized in cryptocurrency exchanges. In some cases, cryptocurrency exchanges may be offline exchanges, off-chain exchanges, or the like, that may not be recorded on a blockchain except for a deposit output and a withdrawal input. Specifically, all trades within the cryptocurrency exchanges may not be recorded. Additionally, a user's exchange account may not be synchronized with his blockchain activity. Accordingly, it may be challenging to track cryptocurrencies that are withdrawn from an exchange, deposited to an exchange, or that have a component that was withdrawn or deposited from an exchange.

Another technical problem dealt with by the disclosed subject matter is determining tax-related information such as profits, losses, tax liability, or the like, that are associated with a cryptocurrency transaction. In some cases, tax-related information may be required when cryptocurrency transactions are performed, by virtue of holding cryptocurrencies, or the like. For example, tax-related information may be utilized for tax filing, for performing tax calculations prior to performing a new transaction, or the like. However, determining tax-related information may involve tracing digital tokens up to a purchasing transaction of each Unspent Transaction Output (UTXO) that is involved with the transaction, for example, to determine an original cost of the UTXO. Specifically, an original cost determination of the UTXO may be required for tax purposes under directives of accounting and tax laws. In some exemplary embodiments, a single UTXO of the transaction may be derived from tens, hundreds, and even thousands of UTXOs from previous transactions. Even with user information, it may be extremely difficult to trace a history of each UTXO at least since a number of transactions and users involved in blockchain transactions is extremely large. A naive method of backtracking each UTXO by exhaustively going through all transactions of a user to find the UTXO's components may be impractical and time consuming. Additionally or alternatively, the naive method may also be impractical as it may not be implemented without introduction of a protocol for enabling the collection of the required data, while the backtracking is performed.

Another technical problem dealt with by the disclosed subject matter is identifying specific cryptocurrencies that are being used. In some cases, it may be beneficial to identify precisely which UTXOs are being used for each transaction, for example, for tax purposes or for any other purpose. If a cryptocurrency that is being sold is not identified, accounting methods such as First In First Out (FIFO), Last In First Out (LIFO), or the like, may be applied. However, such accounting methods are not concise and may result with the undesirable increase or decrease of the tax lability of a user. Accordingly, it may be beneficial to determine a concise identity of every cryptocurrency that is being sold.

In some exemplary embodiments, cryptocurrencies refer to digital tokens, digital currencies, virtual currencies, or any electronically created and stored medium of exchange that uses cryptography for security.

In some exemplary embodiments, instead of using traditional methods of identity verification as proof of ownership of digital assets, cryptocurrency networks use cryptographic digital signatures. A cryptocurrency network typically tracks transactions in a decentralized manner that does not require a central authority. A cryptocurrency network may be distributed across a network of computing devices that maintains a publicly shared distributed ledger, including a transaction database. The distributed ledger may record all transfers of cryptocurrencies in a computer file called the blockchain, which may be publicly available for anyone on the network to examine.

In some exemplary embodiments, the integrity and the chronological order of the blockchain may be enforced with cryptography. Specifically, each block in the blockchain may contain a hash of the previous block, thereby creating the effect of a chain of blocks going back to the genesis block that contains the initial coin allotment when the currency was first created.

A full copy of the blockchain contains every transaction ever executed in that currency, regardless of size. Since every transactional data is permanently recorded, the blockchain includes a continuously growing list of records, blocks, or the like, that are linked and secured using cryptography. With this information, anyone can determine the value currently held by each address as well as validate the authenticity of each of those transactions.

To add a new transaction to the blockchain, the transaction may be propagated through the cryptocurrency network to provide cryptographically-based mathematical proof that the transaction actually occurred within the cryptocurrency framework or via the protocol utilized thereby (this procedure is also referred to as "minting") and, if the transaction is determined to be valid, it is eventually incorporated in a block of the blockchain. Thus, a user's cryptocurrency might be scattered as UTXOs amongst hundreds of transactions and hundreds of blocks.

In some exemplary embodiments, the fundamental building block of a cryptocurrency transaction is an Unspent Transaction Output (UTXO). UTXOs may refer to portions or chunks of cryptocurrency that are locked to a specific owner, recorded on a blockchain, and recognized as currency units by the entire network. The cryptocurrency network tracks all currently available unspent UTXOs. However, the cryptocurrency network does not track UTXOs that have already been spent and enables only a very basic approach for validation requirements. The UTXOs consumed by a transaction are called transaction inputs, and the UTXOs created by a transaction are called transaction outputs. Every input or output may be identified by virtue of the transaction in which it was created, a corresponding coin amount, an index within the transaction, a coin type, and a public address. In some exemplary embodiments, the UTXO may be accessible through its blockchain life cycle using the address. In some cases, the address may be a key hash value, such that may be obtained by applying a hash function on a public key, that can be used to implement direct access to the data structure representing the UTXO. In some exemplary embodiments, a UTXO balance is determined by the transaction and is represented by a number of cryptocurrency units (e.g., 1.00046750, 2.5000000, or the like) coins. This way, chunks of cryptocurrency value move forward from owner to owner and between addresses of a single owner in a chain of transactions consuming and creating UTXOs.

In some exemplary embodiments, cryptocurrencies are divisible such that any UTXO may be divided into smaller units of smaller values, e.g., down to eight decimal places or any other threshold. Although a UTXO can be any arbitrary value, once created it may be indivisible just like a physical coin that cannot be cut in half. If a UTXO is larger than a desired value of a transaction, it may still be consumed in its entirety and change may be generated in the transaction. As a result, most cryptocurrency transactions will generate a change that may be transferred back to the owner.

In some exemplary embodiments, whenever a user receives cryptocurrency in a transaction, that amount is recorded within the blockchain as a UTXO held by the user, until it is spent by the user. Each transaction may include a transaction identifier, one or more inputs with corresponding UTXOs, one or more outputs with corresponding cryptocurrencies, a timestamp, a balance, or the like.

In some exemplary embodiments, users of cryptocurrencies may rely on wallets such as cryptocurrency wallets, Hierarchical Deterministic (EID) wallets, or the like, to store their cryptocurrencies. In some cases, wallets may manage users' private cryptographic keys, monitor their balances, generate transactions, generate public addresses for receiving payments, manage the mapping between human-readable labels and payment addresses, or the like. The content of wallets may evolve over time as transactions are performed by the user, effecting his holdings. A cryptocurrency wallet may include a software wallet stored on a hard drive, a software wallet stored on a smartphone, a software wallet stored on an Internet accessible server, a paper wallet, or the like. As an example, a wallet may retain cryptocurrencies such as a Bitcoin^{™}, a Litecoin^{™}, an Ethereum^{™}, an XRP^{™} coin, or the like.

In some exemplary embodiments, a private cryptographic key (also referred to as an "secret key" and a "private key") is a large random number generated locally on a user's computer or wallet such that it is known only to that user. A public cryptographic key (also referred to as an "address" and a "public key") can be derived from the private key, and serves as the digital representation of the owner of the assets. The public key is the wallet's public address that may be openly shared for transactions, and the private encryption key is the wallet's password that may be privately preserved to maintain ownership.

In some exemplary embodiments, a user may wish to trace a transaction during which a certain cryptocurrency was obtained by the user from a third party. For example, an owner may own a UTXO of three bitcoins (BTC) and may wish to trace an origin thereof. However, the blockchain system, although it may enable a basic tracing for the protocol requirements, may not include any traceable features of the three BTCs. For example, the user may have a long history of transactions including buying and selling a large amount of BTCs, that results in a current balance of three BTCs. The longer the history of transactions, the more difficult it may be to track the current balance, or a balance at a specific time frame, such as at the end of a tax year, when a specific business transaction occurred at any former tax year, or the like.

In some exemplary embodiments, it should be noted that the blockchain does not record or follow the relevant history per user nor per address per se. In some exemplary embodiments, the only tracking that may take place by the blockchain is aimed to support the proof of the ownership and ability to perform transactions but not in the sense of cost basis tracking. In some exemplary embodiments, upon a UTXO spending, by virtue of being within a transaction input, it is gone forever. From that stage the blockchain records the new UTXOs that were created at the same transaction by virtue of being within the transaction output. This makes it difficult to track UTXOs over more than one transaction and to provide cost-basis tracking.

One technical solution of the disclosed subject matter is to implement a forward-tracking method (as opposed to a backtracking method) that performs a top-down analysis of cryptocurrency transactions of a user and continuously monitors new cryptocurrency transactions of the user. The forward-tracking method enables to determine, for each currently held UTXO of the user, its corresponding components based on the top-down analysis. To be noted: the forward-tracking method may be implemented conceptually for tracking new data regarding actions that took place in a past time, for example information regarding new transactions and addresses that are "new" in terms of the data basis but belong to past events.

In some exemplary embodiments, the forward-tracking method may enable a new layer of the cryptocurrency network to be created independently and in parallel to the public cryptocurrency network. The forward-tracking method may enable to use a different protocol or layer without replacement of the cryptocurrency network, but in addition to the cryptocurrency network. The new layer may be viewed as a semi identical peer to the cryptocurrency network, which may operate under a different protocols and methodologies from the cryptocurrency network. Specifically, the new layer may provide or result in a semi identical UTXO retained with additional information representing any UTXO on the cryptocurrency network. In some exemplary embodiments, the new layer may retain, for each UTXO, a list of UTXOs that the UTXO is based on, indicating not only a direct source of a UTXO, but also indirect sources thereof. In some exemplary embodiments, indirect sources may be tracked throughout internal transactions, deposits to exchanges, withdrawal from exchanges, or the like. Additionally or alternatively, if data is added, removed or altered, such as changing a classification of a transaction, adding a new address that is associated with the user, or the like, the existing data may be used, and re-computation may be performed efficiently, without traversing unaffected transactions and UTXOs.

In some exemplary embodiments, the forward-tracking method may include obtaining user information indicating one or more public keys of a user. Additionally, the user information may indicate a wallet address (and address-type which can be tracked as well and bears more useful data that is facilitated), a transaction identifier (referred to as "tx-id" or "tx-hash") associated with the user due to inputs or outputs data, one or more identified inputs or outputs of a transaction that belong to the user, exchange data, or the like. The user information may be obtained directly or indirectly from the user or to be automatically concluded upon data analysis.

In some exemplary embodiments, upon determining that some information of the user is missing, the forward-tracking method may include active classifications and data adding. In some exemplary embodiments the user may be prompted, by the forward-tracking method, to provide additional information, for example, via a visual medium, an aural medium, or the like.

In some exemplary embodiments, the forward-tracking method may include detecting one or more transactions, addresses and other data properties of the user in a blockchain history. For example, the one or more transactions of the user may be detected based on the obtained user information, such as the one or more public keys. In some exemplary embodiments, the blockchain history may be obtained in one or more transmissions from a remote server, such as a blockchain server, or from any other source.

In some exemplary embodiments, the forward-tracking method may include identifying, in the one or more transactions of the user, a subgroup of outputs. In some cases, each output of the subgroup of outputs may be associated with a public key of the user.

In some exemplary embodiments, the forward-tracking method may include classifying cryptocurrencies, UTXOs, or the like, that are associated with respective outputs of the subgroup of outputs. The cryptocurrencies may be classified as internally transferred cryptocurrencies that are transferred from the user and to the user, or as externally transferred cryptocurrencies that are transferred from a third party to the user.

In some exemplary embodiments, the cryptocurrencies may be classified based on a correlation between the user information, inputs of the one or more transactions, or the like. In some cases, the UTXO of an output of a transaction may be classified as internally transferred cryptocurrencies when inputs to the transaction are associated with the user information, for example, when a public key of the output and public keys of inputs to the transaction both belong to the user. In some cases, the UTXO of an output of a transaction may be classified as externally transferred UTXO when all inputs to the transaction are not associated with the one or more public keys of the user, for example, when the inputs to the transaction belong to a third party.

In some exemplary embodiments, the cryptocurrencies may be classified based on their transaction type. Specifically, the one or more transactions of the user may be classified as an internal transaction, a deposit transaction, a withdrawal transaction, a Fiat transaction, a peer to peer (P2P) transaction, an exchange to exchange (Ex-2-Ex) transaction, a mining transaction, or the like. Addresses can also be classified, based on data, such as user information, to be determined as users addresses, user exchange addresses, or the like.

In some exemplary embodiments, the forward-tracking method may include determining cost values of obtained UTXOs and proportionally attaching the cost values to UTXOs that are derived, directly or indirectly, from the obtained UTXOs. Any cryptocurrency that includes chunks of the obtained UTXOs may be assigned with a cost value that is proportional to the inputs derived from the obtained UTXOs.

For example, the forward-tracking method may include obtaining a first cost value of a first externally transferred cryptocurrency associated with a first output of a first transaction. In some cases, the first transaction may include transferring the first cryptocurrency from a third party to the user. In some exemplary embodiments, the first cost value may be obtained directly from the user, from a quotation server, or from any other source of information. In some cases, the first cost value may be obtained based on a quotation from a quotation server that takes into account a timestamp of the first transaction, based on an input from the user that indicates an actual payment, or the like.

Next, the forward-tracking method may include identifying, in the one or more transactions of the user, a second transaction that has a first input that corresponds to the first output of the first transaction. For example, the first input of the second transaction may include a same UTXO as the first output of the first transaction. In some cases, this may be the case when the user utilizes a received UTXO in a new transaction, e.g., as an input.

According to this example, the forward-tracking method may include computing a second cost value of an output of the second transaction that is associated with the user information. In some cases, the second cost value may be determined to proportionally correspond to the first cost value. For example, in a selling transaction, the user may sell part of a previously obtained UTXO, and transfer change back to the initiating wallet or otherwise to the same user. According to this example, the second cost value of the change may include a corresponding proportion of the previously obtained UTXO. As an example, if the previously obtained UTXO included 3 units of the cryptocurrency in a cost of 30 monetary units, and the selling transaction transfers 2 cryptocurrencies to a third party, the change of 1 cryptocurrency may be determined to have a cost value of 10 monetary units. This will be the case even if a current value of 1 cryptocurrency is higher or lower than 10 monetary units. The second cost value may be kept and utilized upon being used as an input of a new transaction. In some exemplary embodiments, the second cost value may be retained by a second shadow record, referred to as UTXO', that may relate to the newly minted UTXO that is retained on the blockchain. In some exemplary embodiments, the shadow record may bear all specific properties that enable consolidating the proper track and cost basis consolidation in the future regardless of unplanned events might take place.

In some exemplary embodiments, the forward-tracking method may include computing a third cost value of an output of the second transaction that is associated with the third party. In some cases, the third cost value may represent a cost value of a UTXO that is being sold. In some exemplary embodiments, the third cost value may be determined to proportionally correspond to the first cost value. As an example, if the UTXO obtained in the first transaction includes 3 cryptocurrencies in a cost of 30 monetary units, and the selling transaction transfers 2 cryptocurrencies to a third party, the transferred 2 cryptocurrencies may be determined to have a cost value of 20 monetary units. Based on this information, a profit or loss of the user may be determined by comparing the cost value of the UTXO to a current value of the UTXO.

For the avoidance of doubt it is clarified that the disclosed subject matter is applicable to cases where there are dozens, hundreds or more of transactions and UTXOs that are involved in the computation of the cost value of a target UTXO. If new data is received that updates information about any of such UTXOs, such as indicating they are received by internal transactions and not external transactions, updating a cost value thereof, or the like, the disclosed subject matter may be utilized to efficiently compute a modified cost value, without having to traverse the transactions from scratch. Instead, pre-existing data that is retained in the layer provided by the disclosed subject matter is utilized to pin-point the information that has changed, and re-computation with the modified data may be performed in constant time complexity (*O*(*1*)).

In some exemplary embodiments, the forward-tracking method may enable UTXOs to be specifically identified from a purchasing transaction where the UTXOs were purchased from a third party, through all transactions that involve the purchased UTXOs, and up to a sale of the UTXOs to a third party. In some cases, the forward-tracking method may retain each cryptocurrency of the user in a database with corresponding determined cost values and relevant properties to support future tracking and cost consolidation. In some cases, all cryptocurrencies of a user may be retained in a same database or table. In other cases, cryptocurrencies of a user may be retained in more than one database or table.

In some exemplary embodiments, the forward-tracking method may include monitoring cryptocurrency activities of the user. In some cases, upon detecting a new transaction initiated by the user, a cost value of an output of the new transaction that belongs to the user may be determined based on cost values of inputs to the new transaction. In some cases, upon detecting a new transaction initiated by a third party, a cost value of an output of the new transaction that belongs to the user may be determined based on a timestamp of the new transaction, a quotation server, an actual payment, or the like. In some exemplary embodiments, UTXOs may be traced and linked across deposits and withdrawals to and from cryptocurrency exchanges. For example, a public address associated with a withdrawal input of a transaction may be linked to exchange data having the same public address. In other cases, cryptocurrency exchanges may be recorded on the blockchain.

In some exemplary embodiments, during every new transaction of the user, a cost value may be attached to outputs of the new transaction according to a percentage of cost values of the inputs. Determined cost values may be considered as a virtual history-tracing layer for each cryptocurrency. For example, a cryptocurrency may have three components including 18% of 2BTC with a cost rate-per-coin of 20$, 50% of 2BTC with a rate-per-coin of 45$, and 1% of 1BTC with a rate-per-coin of 30$. These values may be kept as a virtual history-tracing layer of the cryptocurrency, and whenever the cryptocurrency is used as an input to a new transaction, the history-tracing layer may provide corresponding values.

In some exemplary embodiments, a digital wallet may be configured to select which UTXOs to use as inputs in transactions based on determined cost values. In some exemplary embodiments, the digital wallet may select the UTXO that has the highest cost value, so as to reduce tax liability in a sale transaction. In such a manner, the digital wallet may not select the UTXOs to use based on a FIFO order, but rather taking into consideration external effects of the selection, such as taxation.

One technical effect of utilizing the disclosed subject matter is enabling to specifically identify cryptocurrencies, UTXO, or the like, that are being used in a transaction. Specific identification allows the tracking and unequivocal identification of cryptocurrencies from a seed origination including the first moment that they are obtained by a user, and throughout all later transactions up to the moment of partial or complete sale thereof, thereby allowing a clear and correct comparison of the cryptocurrency cost on the day it was obtained by the user and the cost at a sale.

Another technical effect of utilizing the disclosed subject matter is to facilitate a new dynamic history-tracing layer of data above the blockchain The history-tracing layer may provide at all times data regarding UTXO components for each and every UTXO owned by the user, while being computationally efficient. Specifically, the system may dynamically adapt to any change in user information that changes the history-tracing layer of data in a computational and time efficient manner. The history-tracing layer may be fungible and dynamic, for example, to supplement for the non-fungible and static-by-nature blockchain system.

In some exemplary embodiments, the history-tracing layer may be provided in a user-dependent manner, such that the history is traced per user (e.g., registered user who provided information to the system of the disclosed subject matter). The user-dependent history-tracing layer may enable immediate analysis of new transactions that can be performed in *O(1)* computation complexity, as opposed to a computation complexity that is at least linear in the number of transactions.

Yet another technical effect of utilizing the disclosed subject matter is to back trace the history of cryptocurrencies in a manner that is precisely reflecting the cost basis for tax purposes, economical actual cost, or the like. The disclosed subject matter enables tracing a history of cryptocurrencies to calculate a genuine, original cost of the cryptocurrencies based on the accumulative historic costs of all of the cryptocurrencies bought and sold that resulted in the creation of the currently held cryptocurrencies at any given time. In some exemplary embodiments, the proposed solution provides a clear and updated output of the real value of holdings and profits or losses made by the user, thereby improving inter alia tax calculation in cryptocurrency transactions.

Yet another technical effect of utilizing the disclosed subject matter is to calculate in real time a real cost of obtaining a cryptocurrency, for example, prior to such a purchase. This may assist a user in his financial decisions and enable him to make a conscious, cost-efficient, and productive decision.

Yet another technical effect of utilizing the disclosed subject matter is to provide a practical implementation enabling to track the origin of cryptocurrency coins. The practical implementation is in contrast to the naive solution which is impractical as backtracking the entire blockchain requires excessive resources and is not feasible in real-life scenarios.

The disclosed subject matter may provide for one or more technical improvements over any pre-existing technique and any technique that has previously become routine or conventional in the art.

Additional technical problems, solutions, and effects may be apparent to a person of ordinary skill in the art in view of the present disclosure.

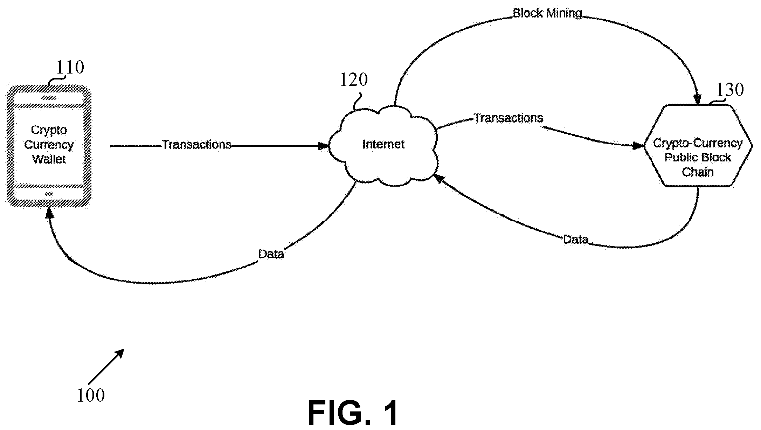

Referring now to Figure 1 showing an environment, in accordance with some exemplary embodiments of the disclosed subject matter. Environment 100 may be a networked system for conducting peer-to-peer transactions with consensus. In some cases, the forward-tracking method may be implemented in Environment 100.

Environment 100 may comprise a User Device 110. User Device 110 may be one or more computers, smartphones, tablets, or the like. User Device 110 may include a processor, a receiver, a transmitter, a memory, a network interface, or the like. User Device 110 may execute a tracking application, e.g., to implement the forward-tracking method. In some cases, the tracking application may be a software background program that runs continuously in the background. In other cases, the tracking application may run when activated by a user, upon certain determined events, when a cryptocurrency application is running or identified, or the like. In some exemplary embodiments, the tracking application may be a website, a software, an embedded hardware, or the like. The tracking application may be located at a network server, a cloud server, in a user's device, or the like.

In some exemplary embodiments, User Device 110 may have wireless or wired access to Internet 120. User Device 110 may be directly or indirectly connected to Internet 120, for example, through a Bluetooth^{™} connection, a WiFi^{™} connection, a local cellular connection, a Local Area Network (LAN), a Wide Area Network (WAN), or the like.

In some exemplary embodiments, the tracking application of User Device 110 may utilize a connection to Internet 120 to communicate with a Blockchain 130. Blockchain 130 may maintain a publicly shared distributed ledger, including a transaction database that records all transfers of cryptocurrencies on a certain cryptocurrency network, such as a Bitcoin^{™} network or the like. Blockchain 130 may be distributed across a network of computing devices such as remote cloud servers, edge devices, or any other server or computing device accessible via Internet 120.

User Device 110 may be used and operated by a user, that may conduct cryptocurrency transactions such as internal transactions, external transactions, exchange transactions, mining transactions, or the like. In some exemplary embodiments, the cryptocurrency transactions may be performed in a peer-to-peer manner. In some exemplary embodiments, the cryptocurrency transactions may be conducted using a cryptocurrency software wallet that may be accessible using User Device 110. In some cases, the software wallet may be stored on User Device 110, stored on a hard drive while being accessible through User Device 110, stored on a server while being accessible through a browser of User Device 110, or the like.

As illustrated in Figure 1, User Device 110 may conduct one or more blockchain transactions that are configured to be added to Blockchain 130, via Internet 120. Additionally, User Device 110 may receive transaction data from Blockchain 130 through Internet 120. Internet 120 may receive transaction requests and information from edge devices such as User Device 110, and after such transactions are verified by designated nodes and sealed in a block, the block may be added to Blockchain 130. At all times, nodes can retrieve transaction information from Blockchain 130 through Internet 120.

As illustrated in Figure 1, any node that is connected to Internet 120 may have a full or partial access to the transaction database of Blockchain 130 that records all transfers of cryptocurrencies. Blockchain 130 may be updated according to received transaction information from Internet 120, as well as minting information from Internet 120, which may determine whether transactions are verified so that they may be added to Blockchain 130.

For the avoidance of doubt, it is stated that the blockchain may be implemented on a decentralized environment, and without requiring a centralized server. In some exemplary embodiments, the decentralized environment may maintain a decentralized ledger useful for tracking cryptocurrency-related transactions.

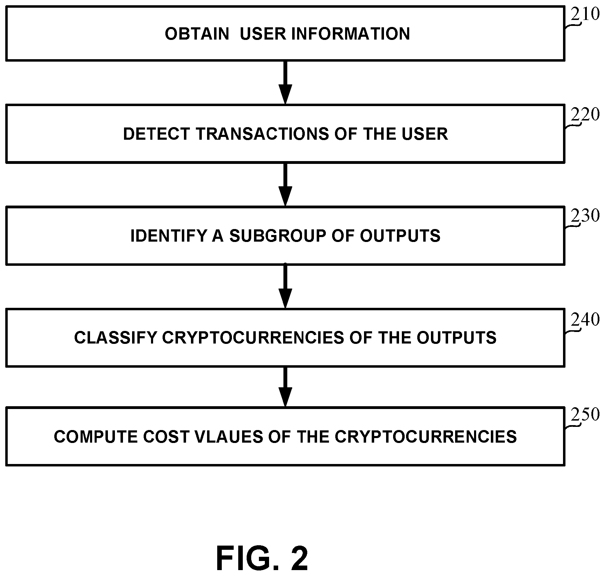

Referring now to Figure 2 showing a flowchart diagram of a cryptocurrency tracking method, in accordance with some exemplary embodiments of the disclosed subject matter.

On Step 210, user information may be obtained from a user. The user information may indicate one or more public keys of a user, Extended Public Keys (XPub) of the user, outputs of the user, inputs of the user, transaction identifiers associated with the user, transaction hashes associated with the user, or the like. The user information may include all the user's addresses or a partial list of addresses. In some cases, the user information may include a cryptocurrency wallet's address that may further be utilized to retain additional addresses of the user such as public keys, outputs, inputs, transaction identifiers, or the like.

In some exemplary embodiments, the user information may include cryptocurrency exchange information that may be obtained directly from an exchange account, indirectly by obtaining an uploaded Comma Separated Value (CSV) file or any other file from the user, or a combination thereof. In some exemplary embodiments, exchange data may be inputted by a user via structured files such as CSV files or excel binary file format (XLS) files that may be exported from one or more exchanges. The structured files may be validated to determine whether they have correct length, format, or the like. In some cases, the structured files may be processed to fit into predefined formats appropriate for further processing.

In some exemplary embodiments, the user information may undergo a validation procedure to determine a correct length and format. The user information may be validated locally or using a third party service. In some cases, a count of detected addresses, their validation status, or the like, may be displayed to the user.

In some cases, some user information may be missing. In some exemplary embodiments, a user may be alerted what type of information is missing, a determined date of the missing information, a currency amount that is missing, or the like. For example, a transaction from a user to a third party that does not return change to the user may alert the user to identify one of the outputs as the change, and accordingly associate the relevant address and UTXO retained therein as belonging to the user. In another example, the user may deposit currencies in an offline exchange, an off-chain exchange, or any other exchange account that is not recorded by the blockchain, and the system may determine that transactions are missing for deposits or withdrawals from an exchange.

If possible, information gaps may be filled automatically, e.g., using a machine learning algorithm or any other algorithm or program. In some cases, the user may be prompted, e.g., via an alert, a request, a visually distinguishable notification, a colored arrow, or the like, to acknowledge or disregard automatically generated user information. If no automatic solution is found, the user may be prompted to input the missing user information manually. The user may select to enter the missing user information or to ignore the alert.

In some exemplary embodiments, missing user information may be identified after some or all of the steps of the method are performed, such as, for example, after Steps 220, 230 and 240 are performed.

On Step 220, one or more transactions of the user may be detected in a blockchain history, for example, based on the user information. In some cases, the blockchain history may include a plurality of cryptocurrency transactions. The blockchain history may be obtained via one or more transmissions from a remote server such as a blockchain server, via third party lookup services, via a locally stored blockchain node, or the like. In some cases, a full blockchain history may be obtained. In other cases, only a partial blockchain history may be obtained.

The one or more transactions of the user may include transaction identifiers, addresses, transaction timestamps, one or more inputs including UTXOs from previous transactions that are now being spent, one or more outputs that are newly created UTXOs, or the like. In some exemplary embodiments, the forward-tracking method may include sending an inquiry to a server, for example, to extract blockchain transactions from a blockchain that correspond to the user information. For example, a user may own a plurality of types of cryptocurrencies such as Bitcoin, Litecoin and Ethereum currencies. For each type of currency that corresponds to the user information, the forward-tracking method may send an inquiry to an appropriate type of blockchain server.

In some exemplary embodiments, extracted blockchain transactions may be presented to the user, for example, to enable the user to select transactions therefrom that are indeed associated with him.

In some cases, blockchain transactions may be converted to predetermined fields, e.g., of a user database. For example, the user database may retain a UTXO identifier field, a type-of-cryptocurrency field, a rate-per-cryptocurrency field, an amount-of-cryptocurrencies field, or the like. In some cases, data may be indexed and saved to the user database in an ongoing process that occurs every time additional data is introduced to the system. In some exemplary embodiments, the UTXO identifier field may uniquely identify a UTXO with an internal identifier, a transaction identifier (TxID), a transaction input or output index, a public key, a cryptocurrency amount, or the like.

In some exemplary embodiments, cryptocurrency transactions may include a plurality of transaction types. For example, cryptocurrency transactions may include selling cryptocurrency to a third party, acquiring cryptocurrency from a third party, transferring cryptocurrency from a first wallet of a user to a second wallet of the user, exchanging a first type of cryptocurrency for a second type of cryptocurrency, exchanging a cryptocurrency for a government-backed currency, depositing cryptocurrency in an exchange, withdrawing cryptocurrency from an exchange, or the like.

On Step 230, a subgroup of outputs may be identified in the one or more transactions of the user. In some exemplary embodiments, each output of the subgroup of outputs may be associated with one of the one or more public keys of the user. In some cases, the subgroup of outputs may represent or indicate UTXOs that have been transferred to the user at some point in time.

On Step 240, cryptocurrencies associated with respective outputs of the subgroup of outputs may be classified as internally transferred cryptocurrencies or externally transferred cryptocurrencies. The cryptocurrencies may be classified based on a correlation between the user information and inputs of the one or more transactions. For example, inputs of a transaction that belong to the user may indicate that the output of the transaction is internally transferred, while inputs that are not associated with the user may indicate that the output is externally transferred. In some cases, externally transferred cryptocurrencies may be transferred from a third party to the user, while internally transferred cryptocurrencies may be transferred from the user and to the user.

In some exemplary embodiments, the forward-tracking method may include classifying cryptocurrencies of the one or more transactions according to one or more transaction types, e.g., as follows:
Deposit transaction: cryptocurrencies are deposited into an exchange;
Withdraw transaction: cryptocurrencies are withdrawn from an exchange;
Ex-2-Ex transaction: cryptocurrencies are transferred from an account in an exchange to an account in another exchange;
Alt-2-Alt transaction: converting one type of cryptocurrency to another alternative type of cryptocurrency;
Fiat transaction: cryptocurrencies are purchased or sold in exchange for legal tender whose value is backed by the government that issued it (hereinafter "Fiat money"). A Fiat transaction may include a buying transaction or a selling transaction;
P2P transaction: cryptocurrencies are purchased or sold in decentralized exchanges of peer to peer wallets. A P2P transaction may include a buying transaction or a selling transaction; and
Mining transaction: cryptocurrencies are received from the blockchain system as a reward for mining the blockchain.

In some exemplary embodiments, a type of the one or more transactions may be determined based on user input, based on an analysis of the inputs and outputs of each transaction, based on a machine learning algorithm that is trained to classify transactions and addresses based on a dataset, or the like. In some exemplary embodiments, a type of a transaction and/or an address may be determined based on a classification of inputs and outputs of the transaction as belonging to the user's wallet, the user's exchange, or to a third party.

In some exemplary embodiments, determining a type of the one or more transactions may take into account a wallet prefix of output or input addresses. For example, two addresses of a same wallet of a user may both have a same or similar prefix, thus allowing a classification between the user's wallet, the user's exchange, and a third party. In some exemplary embodiments, determining a type of the one or more transactions may take into account a possible fee rate (typically up to 2%) that may be implemented as an additional output. Wlien a fee is applied, a change to the user may include a subtraction of the fee from the original change.

In some exemplary embodiments, a UTXO that is an input to a transaction that is recorded on the blockchain may be identified as a withdrawal transaction from a user's exchange account, e.g., which may be off chain, into the user's cryptocurrency wallet. In some exemplary embodiments, a UTXO that is an output to a transaction that is recorded on the blockchain may be identified as a deposit transaction into the user's exchange account, e.g., which may be off chain. Deposit or withdraw transactions may be identified by determining whether a direction of a cryptocurrency movement on the blockchain is opposite of a direction of the cryptocurrency movement in and out of the user's exchange account. If a deposit or withdraw transaction is identified but no associated exchange data is provided by the user, an alert indicating that exchange data is missing may be generated. If a deposit or withdraw transaction is identified and corresponding exchange data is provided, a latency of the transaction may be determined by comparing timestamps of the transaction in the user's exchange account and on the blockchain. Additionally, a cryptocurrency coin amount of the transaction may be compared to the user's exchange account to detect any coin differences that are larger than a possible fee rate (typically up to 2%). To be verified, the transaction is required to have a latency below a threshold and coin differences that are below a possible fee rate.

In some exemplary embodiments, classified transactions or cryptocurrencies may be presented to the user, for example, to enable the user to confirm the classification. For example, a user may confirm transactions as deposits, withdrawals, exchanges, trades within an exchange, or the like. In other cases, a user may change a classification that is incorrect to a correct classification. Such feedback may be utilized to correct the concrete classification, but also as feedback to the machine learning algorithm, so as to improve its classification abilities.

In some exemplary embodiments, based on the classification of the transactions, every input and output of the one or more transactions of the user may be assigned with a corresponding owner's identity. For example, an input or output of the one or more transactions may be determined to belong to a third party, belong to the user's wallet, or belong to an exchange account of the user. The determined identities of the inputs and outputs may be displayed to the user, enabling the user to modify a determined identity to a different identity. For example, when a user detects a wrong classified identity for an input or output, the user may select a different identity from a list of one or more options such as a third party, the user's wallet, or an exchange account. In some cases, every modification of the user may initiate a new calculation that may affect determined identities of other transactions.

On Step 250, cost values of cryptocurrencies may be computed. At first, a first cost value of a first externally transferred cryptocurrency associated with a first output of a first transaction may be obtained. The first externally transferred cryptocurrency may be transferred from a third party to the user. The first cost value may be obtained from the user, from a quotation server, or the like. Next, a second transaction that has a first input that corresponds to the first output of the first transaction may be identified. In some cases, the first input of the second transaction may be identified as having the same UTXO as the first output of the first transaction, thus having the same cost value. Next, a second cost value of an output of the second transaction that is associated with the user information may be computed so that it proportionally corresponds to the first cost value. Additionally, an output of the second transaction that is not associated with the user information may be computed for tax purposes.

In some exemplary embodiments, cost values of cryptocurrencies may be computed iteratively, such that each cryptocurrency associated with an output that has a computed cost value may be used to detect a corresponding input to another transaction, until all the cost values of the cryptocurrencies are detected. The iterations may be initiated with calculating cost values of externally transferred cryptocurrencies, and based on these calculated cost values, all the cryptocurrencies derived thereof may be calculated iteratively.

In some exemplary embodiments, the forward-tracking method may include retaining in a user database, or any other storage apparatus, an identifier of each UTXO, a currency type of the UTXO, a cost rate for each coin of the UTXO, an amount of coins of the currency type in the UTXO, a timestamp of obtaining the UTXO, an identifier of a transaction that outputs the UTXO, an index of the output that includes the UTXO in the transaction, or the like. The user database may be located in the user's device, in a cloud node, in a server, or the like.

In some exemplary embodiments, an activity of a user may be monitored, and, upon detecting a new transaction of the user, a newly created UTXO with a public address of the user may be retained in the user database with a corresponding value that may be based on values of the inputs, e.g., according to a proportional rate.

In some exemplary embodiments, the forward-tracking method may include determining a profit or loss of a transaction based on a cost value of the UTXO that is being sold and based on the current value of the UTXO. In some cases, a profit may be calculated by subtracting the cost value of the UTXO from the current value of the UTXO. In some exemplary embodiments, a calculated profit may be hashed, encrypted, secured, or the like, to ensure a high security level. A plurality of legal functions may be applied to the calculated profit. For example, a tax calculation that in accordance to a nationality of the user may be applied to the calculated profit, to enable the user to calculate the precise tax that is due to tax authorities based on the transaction. In some cases, users may be instructed to input relevant data such as tax law information, nationality, or the like. Additionally or alternatively, such information may be obtained automatically, e.g., using sensor information such as a GPS of a user's device, a cellular signal of the user's device, or the like, to determine a relevant location of the user and relevant legal procedures and rules applicable to the user.

In some exemplary embodiments, the forward-tracking method may be utilized to produce one or more reports. For example, a complete tax report may be produced. In another example, a report may include output files containing processed exchange data, wallet data, a combination thereof, or the like, with corresponding cost values, profits, losses, tax calculations, or the like. Output files may be produced in a CSV format, an XLS format, or in any other format. In some cases, when processing trades within an exchange to be included in a tax report, a tax of the trades may be calculated using LIFO, FIFO, or any other accounting method. If possible, specific identification may be applied to the trades.

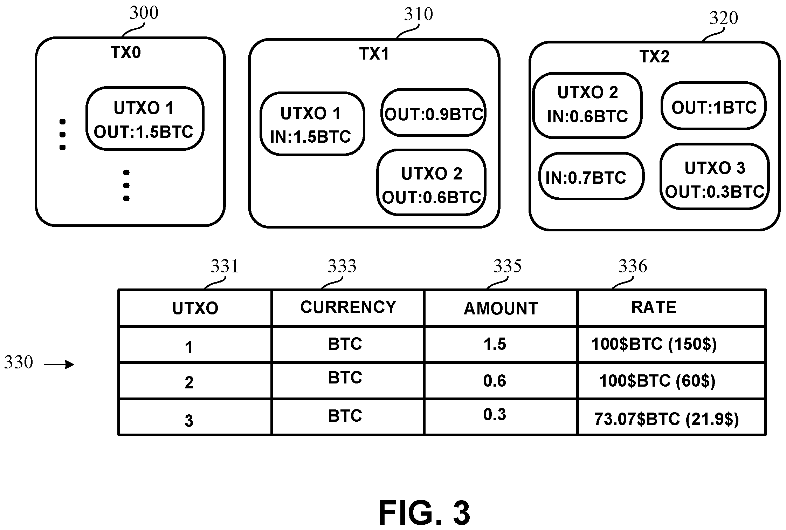

Referring now to Figure 3 showing transactions in an exemplary scenario, in accordance with some exemplary embodiments of the disclosed subject matter.

In some exemplary embodiments, a purchasing cost of a UTXO of a transaction may be calculated when the UTXO is created as an output of a cryptocurrency transaction between an owner of the UTXO and a third party. In some cases, the UTXO may be obtained as a reward by virtue of mining.

As is illustrated in Figure 3, a first user, referred to as Bob, may receive from a second user, referred to as Alice, a first output of 1.5 BTC during Transaction 300. A UTXO Identifier 331 field of the output may be retained in Database 330, together with a Currency Type 333 field, an Amount of Coins 335 field, a Rate Per Coin 336 field, or the like. In one example, as illustrated in Figure 3, UTXO Identifier 331 of the first output may be "1", Currency Type 333 may be BTC, Amount of Coins 335 may be 1.5, and Rate Per Coin 336 may be 100$. Accordingly, a cost of UTXO 1 is 150$.

Transaction 310, following Transaction 300, may be initiated by Bob selling 0.9 BTC to Charlie. Transaction 3 10 may include as an input UTXO 1, which was obtained during Transaction 300, and two newly created outputs. The 0.9 BTC output for Charlie may use the obtained 1.5 BTC as an input, for example. In other cases, Bob's wallet may select to use the 1.5 BTC as an input for Transaction 310 based on any determination or criteria.

The outputs of Transaction 310 may include a first output of 0.9 BTC for Charlie, and a second output of 0.6 BTC as change for Bob. A cost value of the 0.9 BTC output may be calculated according to a proportional rate of the original cost value of the utilized UTXO, which is 1.5 BTC. In one example, as illustrated in Figure 3, a Rate Per Coin 336 of the 1.5 BTC is 100$. Accordingly, Rate Per Coin 336 of the 0.9 BTC may be 100$ as well, such that a cost value of the 0.9 BTC is 90$. This may be the case even if a current exchange rate of 0.9 BTC is 300$ or any other rate. In some cases, a profit from selling the 0.9 BTC to Charlie may be calculated by subtracting 90$ from the current rate of the 0.9 BTC, which may be obtained from a quotation server. In other cases, a profit from selling the 0.9 BTC may be calculated by subtracting 90$ from the payment received.

A UTXO Identifier 331 of the 0.6 BTC change may be retained in Database 330 as "2", the Currency Type 333 may be BTC, the Amount of Coins 335 may be 0.6, and Rate Per Coin 336 per coin may be 100$. Accordingly, a cost of UTXO 2 is 60$.

Transaction 320, following Transaction 310, may be initiated by Bob selling 1 BTC to Charlie. Transaction 320 may include two inputs from the first user - UTXO 2 that was received as change, and 0.7 BTC that was obtained previously for a rate of 50$ per BTC. The outputs of Transaction 320 may include a first output of 1 BTC for Charlie, and a second output of 0.3 BTC as change for Bob. A cost value of the 1 BTC output may be calculated according to a proportional rate of the original cost of the utilized inputs. Specifically, Rate Per Coin 336 of the 1 BTC may be proportionally comprised from the 50$ rate per coin of the 0.7 BTC, and from the 100$ rate per coin of the 0.6 BTC, resulting in a new Rate Per Coin 336 of 73.07$.

A UTXO Identifier 331 of the 0.3 BTC change may be retained in Database 330 as "3", the Currency Type 333 may be BTC, the Amount of Coins 335 may be 0.3, and Rate Per Coin 336 may be 73.07$. Accordingly, a cost of UTXO 3 is 21.9$. The data properties and identifiers of UTXO 3 may be indexed under the forward-tracking method and be available to provide proof in accordance with directives of regulators.

In some exemplary embodiments, for each entry of a UTXO that is retained in Database 330, a table may be produced with a full record of a history the UTXO. In some cases, the full record of the history the UTXO may include every component of a Rate Per Coin 336 which may be saved with its corresponding proportion. For example, the full record of UTXO 3 may include its "parents" which are the 0.7 BTC with a rate per coin of 50$ and the 0.6 BTC with a rate per coin of 100$. The "parents" may be retained with their corresponding proportion. In some cases, the full record of UTXO 3 may include any UTXO from which UTXO 3 was originated, including UTXO 1, UTXO 2, and the 0.7 BTC from the moment they were obtained. Each component of UTXO 3 or "parent" of a component of UTXO 3 may be hashed and stored, thereby creating a Hash Path. The Hash Path of UTXO 3 may include, for each associated UTXO, a corresponding transaction identifier, a corresponding index, a corresponding address, a determined type of transaction, an identity of an owner of the corresponding address, or the like. This way, the forward-tracking method creates an adjustable hash path that is built up to provide proof on delicate matters such as tax reports. Specifically, the hash path may be compiled or converted into tax reports. In some exemplary embodiments, the user-related information, either initial data received therefrom or data computed based thereon and in accordance with the disclosed subject matter may be confidential, private, secret, or the like. In some exemplary embodiments, initial user information provided by the user, as well as stored associated information such as hash paths for each retained UTXO, may be hashed and encoded. In some cases, hashing the information may guaranty the information's security while allowing safe communicated of the hashed information over computerized networks. The hashed information may be used for zero knowledge proofs without leaking private information such as a user's identity.

In some exemplary embodiments, the forward-tracking method is created from an increasing number of streams of small pieces of data that keep changing on the pipeline of data flow as data is collected. In some exemplary embodiments, since every UTXO is kept with an independent hash path indicating its full history, the forward-tracking method may enable dynamic adjustments based on changes in the user information. A hash path of a UTXO may be dynamically modified based on a continuous collection of information which may result in modification of the user information. Any added user information or modifications of the user information may cause the forward-tracking method to change the relevant area in the hash path and apply a classification on the modified user information.

For example, a user may indicate that a UTXO input that was previously indicated as belonging to the user, actually belongs to a third party. This may change a classification of one or more related transactions. The forward-tracking method may be immediately compiled on the related transactions to classify them accordingly, thereby producing a modified hash path of the UTXO input. In case the user wishes to sell the UTXO input, a modified hash path may be already produced and no further processing may be required.

In some exemplary embodiments, for simplicity purposes only, Transactions 300, 310, 320 are described without any transactions fee. However, fees may be applied to Transactions 300, 310, 320.

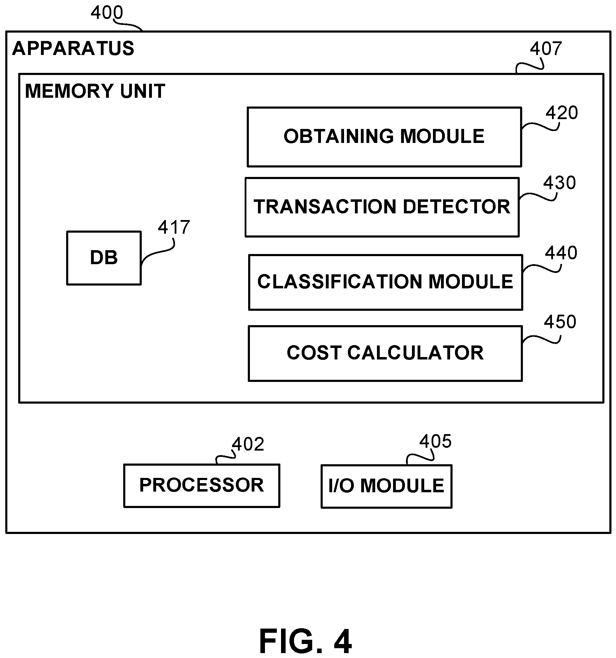

Referring now to Figure 4 showing a block diagram of components of an apparatus, in accordance with some exemplary embodiments of the disclosed subject matter.

In some exemplary embodiments, an Apparatus 400 may comprise a Processor 402. Processor 402 may be a Central Processing Unit (CPU), a microprocessor, an electronic circuit, an Integrated Circuit (IC) or the like. Processor 402 may be utilized to perform computations required by Apparatus 400 or any of its subcomponents. Processor 402 may be configured to execute computer-programs useful in performing the method of Figure 2, or the like.

In some exemplary embodiments of the disclosed subject matter, an Input/Output (I/O) Module 405 may be utilized to provide an output to and receive input from a user. I/O Module 405 may be operatively coupled to a touch screen, a mouse, a keyboard or a similar device which may be used for receive input from the user. I/O Module 405 may be operatively coupled to a display (not shown), speaker (not shown) or a similar device which may be used for providing feedback or reports to the user. I/O Module 405 may further be used to transmit and receive information to and from the user or any other apparatus in communication therewith.

In some exemplary embodiments, Apparatus 400 may comprise a Memory Unit 407. Memory Unit 407 may be a short-term storage device or long-term storage device. Memory Unit 407 may be a persistent storage or volatile storage. Memory Unit 407 may be a disk drive, a Flash disk, a Random Access Memory (RAM), a memory chip, or the like. In some exemplary embodiments, Memory Unit 407 may retain program code operative to cause Processor 402 to perform acts associated with any of the subcomponents of Apparatus 400. In some exemplary embodiments, Memory Unit 407 may retain program code operative to cause Processor 402 to perform acts associated with any of the steps in Figure 2.

The components detailed below may be implemented as one or more sets of interrelated computer instructions, executed for example by Processor 402 or by another processor. The components may be arranged as one or more executable files, dynamic libraries, static libraries, methods, functions, services, or the like, programmed in any programming language and under any computing environment.

In some exemplary embodiments, Obtaining Module 420 may be configured to obtain user information from the user, for example, via I/O Module 405 or via any other component or device. Obtaining Module 420 may be configured to obtain at least a partial blockchain history in one or more transmissions from a remote server, from a blockchain server, from third party lookup services, from a locally stored blockchain node, or from any other source.

In some exemplary embodiments, Transaction Detector 430 may be configured to detect one or more transactions of the user in the blockchain history, for example, obtained by Obtaining Module 420. In some exemplary embodiments, Transaction Detector 430 may be configured to determine whether or not a transaction is associated with a user based the user information obtained by Obtaining Module 420. For example, if the user information indicates a transaction identifier, Transaction Detector 430 may detect a corresponding transaction in the blockchain history. In another example, if the user information indicates a public key, Transaction Detector 430 may detect one or more transactions in the blockchain history that include the public key as an input or an output.

In some exemplary embodiments, Classification Module 440 may be configured to identify a subgroup of outputs in the transactions of the user, for example, which may be detected by Transaction Detector 430. Classification Module 440 may include in the subgroup of outputs any output of a transaction of the user that is transferred to the user. In some cases, each output of the subgroup of outputs may be associated with a public key of the user.

In some exemplary embodiments, Classification Module 440 may be configured to classify cryptocurrencies that are associated with the subgroup of outputs. Classification Module 440 may classify such cryptocurrencies as internally transferred cryptocurrencies, that are transferred from the user and to the user, or externally transferred cryptocurrencies that are transferred from a third party to the user.

In some exemplary embodiments, Classification Module 440 may classify the cryptocurrencies based on a type of transaction that obtained each cryptocurrency. For example, Classification Module 440 may classify the one or more transactions of the user as a deposit transaction, a withdrawal transaction, a Fiat transaction, a peer to peer (P2P) transaction, an exchange to exchange (Ex-2-Ex) transaction, a mining transaction, an internal transaction, or the like.

In some exemplary embodiments, Classification Module 440 may utilize a machine learning algorithm to provide a classification model. In some exemplary embodiments, the machine learning algorithm may be a supervised learning algorithm, an unsupervised learning algorithm, or the like.

In some exemplary embodiments, Cost Calculator 450 may be configured to determine cost values of classified cryptocurrencies, e.g., which may be classified by Classification Module 440. Cost Calculator 450 may first determine cost values of obtained cryptocurrencies that are obtained from a third party. For any cryptocurrency that is derived, directly or indirectly, from the obtained cryptocurrencies, Cost Calculator 450 may determine a proportional cost value.

In some exemplary embodiments, Cost Calculator 450 may retain in Database (DB) 417 a UTXO identifier field, a type-of-cryptocurrency field, a rate-per-cryptocurrency field, an amount-of-cryptocurrencies field, or the like. In some cases, Cost Calculator 450 may index and save data to DB 417 in an ongoing process that occurs every time additional data is introduced to the system. For example, every time the user is involved in a new transaction.

In some exemplary embodiments, a complete tax report may be generated based on the information retained in DB 417. An accurate and full user information may result in a more precise tax report.

In some exemplary embodiments, a digital wallet software may utilize the information retained in DB 417 to select a desired UTXO to be utilized as input in a transaction. In some exemplary embodiments, the selection may be performed so as to select the UTXO having the higher Rate Per Coin 336 value, so as to reduce tax liability due to the transaction.

The present invention may be a system, a method, and/or a computer program product. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present invention may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. The embodiment was chosen and described in order to best explain the principles of the invention and the practical application, and to enable others of ordinary skill in the art to understand the invention for various embodiments with various modifications as are suited to the particular use contemplated.

## Claims

1. A computer-implemented method comprising the steps:
obtaining user information indicating one or more addresses of a user, wherein the one or more addresses comprise at least one public cryptographic key that is generated by a software wallet of the user and that is utilized as an output of a cryptocurrency transaction recorded on a public blockchain system;
generating a database for specific identification of cryptocurrencies of the user, the cryptocurrencies of the user are recorded within the public blockchain system, the database forms a parallel layer to the public blockchain system, the database is independent of a protocol utilized by the public blockchain system, the database retaining records identifying the cryptocurrencies of the user and additional information not directly recorded in the public blockchain system, said generating is performed by forward-tracking recorded cryptocurrency transactions that are recorded in the public blockchain system, said forward-tracking comprising:
detecting one or more transactions of the user in a blockchain history based on the user information, wherein the blockchain history is obtained in one or more transmissions from a remote server, which remote server is part of the public blockchain system;
identifying, in the one or more transactions of the user, a subgroup of outputs, wherein each output of the subgroup of outputs is associated with one of the one or more addresses of the user;
classifying, by a computer, cryptocurrencies associated with respective outputs of the subgroup of outputs as internally transferred cryptocurrencies or externally transferred cryptocurrencies based on a correlation between the user information and inputs of the one or more transactions, wherein the externally transferred cryptocurrencies are transferred from a third party to the user, wherein the internally transferred cryptocurrencies are transferred from the user and to the user;
obtaining a first cost value of a first externally transferred cryptocurrency associated with a first output of a first transaction, wherein the subgroup of outputs comprises the first output;
identifying, in the one or more transactions of the user, a second transaction that has a first input that corresponds to the first output of the first transaction, wherein the first externally transferred cryptocurrency is utilized as the first input of the second transaction;
computing a second cost value of an output of the second transaction that is associated with the user information to proportionally correspond to the first cost value; and
recording in the database a record of a currently held cryptocurrency that comprises an unspent transaction output (UTXO) identifier of the second transaction and the second cost value;
obtaining an indication of a new transaction initiated by the user; and
utilizing the database to determine a cost value of an output of the new transaction that belongs to the user, the cost value is determined based on cost values of inputs to the new transaction that are recorded in the database, wherein an input to the new transaction comprises at least an unspent transaction output (UTXO) identifier, whereby the determination of the cost value of the output of the new transaction is performed without traversing the blockchain history.

2. The method of Claim 1 comprising determining that a cost value of the first input is identical to the first cost value.

3. The method of Claim 1, wherein said obtaining the indication of the new transaction comprises monitoring cryptocurrency activities of the user.

4. The method of Claim 1 comprising monitoring cryptocurrency activities of the user, and, upon detecting a new transaction initiated by the third party, determining a cost value of an output of the new transaction that belongs to the user based on a timestamp of the new transaction.

5. The method of Claim 1 comprising classifying cryptocurrencies associated with an output of a transaction of the one or more transactions to be internally transferred cryptocurrencies when inputs to the transaction are associated with the user information, and, upon receiving a new indication that the output of the transaction of the one or more transactions does not belong to the user, reclassifying transactions that are associated with the transaction of the one or more transactions based on the new indication.

6. The method of Claim 1 comprising classifying cryptocurrencies associated with an output of a transaction of the one or more transactions to be externally transferred cryptocurrencies when all inputs to the transaction are not associated with the one or more addresses of the user, and, upon receiving a new indication that the output of the transaction of the one or more transactions belongs to the user, reclassifying transactions that are associated with the transaction of the one or more transactions based on the new indication.

7. The method of Claim 1, wherein said obtaining the first cost value is based on a quotation from a quotation server that takes into account a timestamp of the first transaction or based on an input from the user that indicates an actual payment.

8. The method of Claim 1, wherein the user information further indicates at least one of the group consisting of: a transaction identifier associated with the user, one or more identified inputs or outputs of a transaction that belong to the user, exchange data, and a wallet address.

9. The method of Claim 1 comprising retaining each cryptocurrency of the user in at least one database with corresponding determined cost values.

10. The method of Claim 1 comprising classifying each of the one or more transactions of the user as an internal transaction, a deposit transaction, a withdrawal transaction, a Fiat transaction, a peer to peer (P2P) transaction, an exchange to exchange (Ex-2-Ex) transaction, an alternative cryptocurrency to alternative cryptocurrency (Alt-2-Alt) transaction, or a Mining transaction.

11. The method of Claim 1 comprising, upon determining that some information of the user is missing, prompting the user to provide additional information to update the user information to include the additional information.

12. A computer program product comprising a non-transitory computer readable storage medium retaining program instructions, which program instructions when read by a processor, cause the processor to perform:
obtaining user information indicating one or more addresses of a user, wherein the one or more addresses comprise at least one public cryptographic key that is generated by a software wallet of the user and that is utilized as an output of a cryptocurrency transaction recorded on a public blockchain system;
generating a database for specific identification of cryptocurrencies of the user, the cryptocurrencies of the user are recorded within the public blockchain system, the database forms a parallel layer to the public blockchain system, the database is independent of a protocol utilized by the public blockchain system, the database retaining records identifying the cryptocurrencies of the user and additional information not directly recorded in the public blockchain system, said generating is performed by forward-tracking recorded cryptocurrency transactions that are recorded in the public blockchain system, said forward-tracking comprising;
detecting one or more transactions of the user in a blockchain history based on the user information, wherein the blockchain history is obtained in one or more transmissions from a remote server, which remote server is part of the public blockchain system;
identifying, in the one or more transactions of the user, a subgroup of outputs, wherein each output of the subgroup of outputs is associated with one of the one or more addresses of the user;
classifying, by a computer, cryptocurrencies associated with respective outputs of the subgroup of outputs as internally transferred cryptocurrencies or externally transferred cryptocurrencies based on a correlation between the user information and inputs of the one or more transactions, wherein the externally transferred cryptocurrencies are transferred from a third party to the user, wherein the internally transferred cryptocurrencies are transferred from the user and to the user;
obtaining a first cost value of a first externally transferred cryptocurrency associated with a first output of a first transaction, wherein the subgroup of outputs comprises the first output;
identifying, in the one or more transactions of the user, a second transaction that has a first input that corresponds to the first output of the first transaction wherein the first externally transferred cryptocurrency is utilized as the first input of the second transaction;
computing a second cost value of an output of the second transaction that is associated with the user information to proportionally correspond to the first cost value; and
recording in the database a record of a currently held cryptocurrency that comprises an unspent transaction output (UTXO) identifier of the second transaction and the second cost value;
obtaining an indication of a new transaction initiated by the user; and
utilizing the database to determine a cost value of an output of the new transaction that belongs to the user, the cost value is determined based on cost values of inputs to the new transaction that are recorded in the database, wherein an input to the new cryptocurrency transaction comprises at least an unspent transaction output (UTXO) identifier, whereby the determination of the cost value of the output of the new transaction is performed without traversing the blockchain history.

13. The product of Claim 12, wherein the program instructions, when read by a processor, cause the processor to monitor cryptocurrency activities of the user, and, upon detecting a new transaction initiated by the user, determine a cost value of an output of the new transaction that belongs to the user based on determined cost values of inputs to the new transaction.

14. A system comprising a processor and coupled memory, the processor being adapted to perform:
obtaining user information indicating one or more addresses of a user, wherein the one or more addresses comprise at least one public cryptographic key that is generated by a software wallet of the user and that is utilized as an output of a cryptocurrency transaction recorded on a public blockchain system;
generating a database for specific identification of cryptocurrencies of the user, the cryptocurrencies of the user are recorded within the public blockchain system, the database forms a parallel layer to the public blockchain system, the database is independent of a protocol utilized by the public blockchain system, the database retaining records identifying the cryptocurrencies of the user and additional information not directly recorded in the public blockchain system, said generating is performed by forward-tracking recorded cryptocurrency transactions that are recorded in the public blockchain system, said forward-tracking comprising;
detecting one or more transactions of the user in a blockchain history based on the user information, wherein the blockchain history is obtained in one or more transmissions from a remote server, which remote server is part of the public blockchain system;
identifying, in the one or more transactions of the user, a subgroup of outputs, wherein each output of the subgroup of outputs is associated with one of the one or more addresses of the user;
classifying, by a computer, cryptocurrencies associated with respective outputs of the subgroup of outputs as internally transferred cryptocurrencies or externally transferred cryptocurrencies based on a correlation between the user information and inputs of the one or more transactions, wherein the externally transferred cryptocurrencies are transferred from a third party to the user, wherein the internally transferred cryptocurrencies are transferred from the user and to the user;
obtaining a first cost value of a first externally transferred cryptocurrency associated with a first output of a first transaction, wherein the subgroup of outputs comprises the first output;
identifying, in the one or more transactions of the user, a second transaction that has a first input that corresponds to the first output of the first transaction, wherein the first externally transferred cryptocurrency is utilized as the first input of the second transaction;
computing a second cost value of an output of the second transaction that is associated with the user information to proportionally correspond to the first cost value recording in the database a record of a currently held cryptocurrency that comprises an unspent transaction output (UTXO) identifier of the second transaction and on the second cost value;
obtaining an indication of a new transaction initiated by the user; and
utilizing the database to determine a cost value of an output of the new transaction that belongs to the user, the cost value is determined based on cost values of inputs to the new transaction that are recorded in the database, wherein an input to the new cryptocurrency transaction comprises at least an unspent transaction output (UTXO) identifier, whereby the determination of the cost value of the output of the new transaction is performed without traversing the blockchain history.

## Patentansprüche

1. Computerimplementiertes Verfahren, das die folgenden Schritte umfasst:
erfassen von Benutzerinformationen, die eine oder mehrere Adressen eines Benutzers angeben,
wobei die eine oder mehreren Adressen mindestens einen öffentlichen kryptografischen Schlüssel umfassen, der durch eine Software-Wallet des Benutzers erzeugt wird und der als Ausgabe einer Kryptowährungstransaktion verwendet wird, die in einem öffentlichen Blockchain-System aufgezeichnet ist;
erzeugen einer Datenbank zur spezifischen Identifizierung von Kryptowährungen des Benutzers, die Kryptowährungen des Benutzers werden innerhalb des öffentlichen Blockchain-Systems aufgezeichnet, die Datenbank bildet eine parallele Schicht zum öffentlichen Blockchain-System, die Datenbank ist unabhängig von einem Protokoll, das vom öffentlichen Blockchain-System verwendet wird, in der Datenbank werden Aufzeichnungen gespeichert, die die Kryptowährungen des Benutzers sowie zusätzliche Informationen, die nicht direkt im öffentlichen Blockchain-System aufgezeichnet sind, identifizieren; dieses Erzeugen erfolgt durch Vorwärtsverfolgen aufgezeichneter Kryptowährungstransaktionen, die im öffentlichen Blockchain-System aufgezeichnet sind, wobei das Vorwärtsverfolgen Folgendes umfasst:
erkennen einer oder mehrerer Transaktionen des Benutzers in einer Blockchain-Historie auf Grundlage der Benutzerinformationen, wobei die Blockchain-Historie in einer oder mehreren Übertragungen von einem Remote-Server aus erhalten wird, wobei der Remote-Server Teil des öffentlichen Blockchain-Systems ist;
identifizieren einer Ausgaben-Untergruppe in der einen oder den mehreren Transaktionen des Benutzers, wobei jede Ausgabe der Ausgaben-Untergruppe einer der einen oder der mehreren Adressen des Benutzers zugeordnet ist;
klassifizieren von Kryptowährungen, die jeweiligen Ausgaben der Ausgaben-Untergruppe zugeordnet sind, als intern übertragene Kryptowährungen oder extern übertragene Kryptowährungen durch einen Computer auf Grundlage einer Korrelation zwischen den Benutzerinformationen und Eingaben der einen oder mehreren Transaktionen, wobei die extern übertragenen Kryptowährungen von einem Dritten an den Benutzer übertragen werden, wobei die intern übertragenen Kryptowährungen von dem Benutzer und an den Benutzer übertragen werden;
erhalten eines ersten Anschaffungswerts einer ersten extern übertragenen Kryptowährung, die einer ersten Ausgabe einer ersten Transaktion zugeordnet ist, wobei die Ausgaben-Untergruppe die erste Ausgabe umfasst;
identifizieren einer zweiten Transaktion in der einen oder den mehreren Transaktionen des Benutzers, die eine erste Eingabe aufweist, die der ersten Ausgabe der ersten Transaktion entspricht, wobei die erste extern übertragene Kryptowährung als die erste Eingabe der zweiten Transaktion verwendet wird;
berechnen eines zweiten Anschaffungswerts einer Ausgabe der zweiten Transaktion, die den Benutzerinformationen zugeordnet ist, um proportional dem ersten Anschaffungswert zu entsprechen; und
aufzeichnen einer Aufzeichnung einer aktuell gehaltenen Kryptowährung in der Datenbank, der eine nicht ausgegebene Transaktionsausgabe- (UTXO-) Kennung der zweiten Transaktion und des zweiten Anschaffungswerts umfasst;
das Erhalten einer Angabe einer neuen Transaktion, die durch den Benutzer initiiert wurde; und
unter Verwendung der Datenbank, um einen Anschaffungswert einer Ausgabe der neuen Transaktion, die dem Benutzer gehört, zu bestimmen, wird der Anschaffungswert basierend auf Anschaffungswerten von Eingaben der neuen Transaktion, die in der Datenbank erfasst sind, bestimmt, wobei eine Eingabe der neuen Transaktion mindestens eine nicht ausgegebene Transaktionsausgabe- (UTXO-) Kennung umfasst, wobei die Bestimmung des Anschaffungswerts der Ausgabe der neuen Transaktion durchgeführt wird, ohne die Blockchain-Historie zu durchlaufen.

2. Verfahren nach Anspruch 1, das die Bestimmung dessen umfasst, dass ein Anschaffungswert der ersten Eingabe mit dem ersten Anschaffungswert identisch ist.

3. Verfahren nach Anspruch 1, bei dem das Erhalten der Angabe der neuen Transaktion das Überwachen von Kryptowährungsaktivitäten des Benutzers umfasst.

4. Verfahren nach Anspruch 1, das das Überwachen von Kryptowährungsaktivitäten des Benutzers und, beim Erkennen einer neuen von dem Dritten initiierten Transaktion, das Bestimmen eines Anschaffungswerts einer Ausgabe der neuen Transaktion, die dem Benutzer gehört, auf Grundlage eines Zeitstempels der neuen Transaktion umfasst.

5. Verfahren nach Anspruch 1, das das Klassifizieren von Kryptowährungen, die einer Ausgabe einer Transaktion der einen oder mehreren Transaktionen, die intern übertragen werden sollen, zugeordnet sind, wenn Eingaben in die Transaktion den Benutzerinformationen zugeordnet sind, und, beim Erhalt einer neuen Angabe, dass die Ausgabe der Transaktion der einen oder mehreren Transaktionen nicht dem Benutzer gehört, das Umklassifizieren von Transaktionen, die der Transaktion der einen oder mehreren Transaktionen zugeordnet sind, auf Grundlage der neuen Angabe umfasst.

6. Verfahren nach Anspruch 1, das das Klassifizieren von Kryptowährungen, die einer Ausgabe einer Transaktion der einen oder mehreren extern zu übertragenden Transaktionen zugeordnet sind, wenn alle Eingaben für die Transaktion nicht der einen oder mehreren Adressen des Benutzers zugeordnet sind, und, beim Erhalt einer neuen Angabe, dass die Ausgabe der Transaktion der einen oder mehreren Transaktionen dem Benutzer gehört, das Neuklassifizieren von Transaktionen, die der Transaktion der einen oder mehreren Transaktionen zugeordnet sind, auf Grundlage der neuen Angabe umfasst.

7. Verfahren nach Anspruch 1, bei dem das Erhalten des ersten Anschaffungswerts auf einem Angebot von einem Angebotsserver basiert, bei dem ein Zeitstempel der ersten Transaktion berücksichtigt wird, oder auf einer Eingabe von dem Benutzer, die eine tatsächliche Zahlung angibt.

8. Verfahren nach Anspruch 1, bei dem die Benutzerinformationen ferner mindestens eine der folgenden Angaben umfassen: eine Transaktionskennung, die dem Benutzer zugeordnet ist, eine oder mehrere identifizierte Eingaben oder Ausgaben einer Transaktion, die dem Benutzer gehören, Austauschdaten und eine Wallet-Adresse.

9. Verfahren nach Anspruch 1, das das Aufbewahren jeder Kryptowährung des Benutzers in mindestens einer Datenbank mit entsprechenden bestimmten Anschaffungswerten umfasst.

10. Verfahren nach Anspruch 1, das das Klassifizieren jeder der einen oder mehreren Transaktionen des Benutzers als interne Transaktion, Einzahlungstransaktion, Auszahlungstransaktion, Fiat-Transaktion, Peer-to-Peer- (P2P-) Transaktion, Exchange-to-Exchange- (Ex-2-Ex-) Transaktion, alternative-Kryptowährung-zualternativer-Kryptowährung- (Alt-2-Alt-) Transaktion oder Mining-Transaktion umfasst.

11. Verfahren nach Anspruch 1, das - wenn festgestellt wird, dass bestimmte Informationen des Benutzers fehlen - das Auffordern des Benutzers zum Bereitstellen zusätzlicher Informationen umfasst, um die zusätzlichen Informationen zu den Benutzerinformationen hinzuzufügen.

12. Ein Computerprogrammprodukt, das ein nichtflüchtiges computerlesbares Speichermedium umfasst, auf dem Programmanweisungen gespeichert werden, wobei die Programmanweisungen, wenn sie von einem Prozessor gelesen werden, den Prozessor dazu veranlassen, folgende Vorgänge auszuführen:
erhalten von Benutzerinformationen, in denen eine oder mehrere Adressen eines Benutzers angegeben ist bzw. sind, wobei die eine oder mehreren Adressen mindestens einen öffentlichen kryptografischen Schlüssel umfassen, der durch eine Software-Wallet des Benutzers erzeugt wird und der als Ausgabe einer Kryptowährungstransaktion verwendet wird, die in einem öffentlichen Blockchain-System aufgezeichnet ist;
erzeugen einer Datenbank zur spezifischen Identifizierung von Kryptowährungen des Benutzers, die Kryptowährungen des Benutzers werden innerhalb des öffentlichen Blockchain-Systems aufgezeichnet, die Datenbank bildet eine parallele Schicht zum öffentlichen Blockchain-System, die Datenbank ist unabhängig von einem Protokoll, das vom öffentlichen Blockchain-System verwendet wird, in der Datenbank werden Datensätze gespeichert, die die Kryptowährungen des Benutzers identifizieren, sowie zusätzliche Informationen, die nicht direkt im öffentlichen Blockchain-System aufgezeichnet sind; dieses Erzeugen erfolgt durch Vorwärtsverfolgen aufgezeichneter Kryptowährungstransaktionen, die im öffentlichen Blockchain-System aufgezeichnet sind, wobei das Vorwärtsverfolgen Folgendes umfasst;
erkennen einer oder mehrerer Transaktionen des Benutzers in einer Blockchain-Historie auf Grundlage der Benutzerinformationen, wobei die Blockchain-Historie in einer oder mehreren Übertragungen von einem Remote-Server aus erhalten wird, wobei der Remote-Server Teil des öffentlichen Blockchain-Systems ist;
identifizieren einer Ausgaben-Untergruppe in der einen oder den mehreren Transaktionen des Benutzers, wobei jede Ausgabe der Ausgaben-Untergruppe einer der einen oder der mehreren Adressen des Benutzers zugeordnet ist;
klassifizieren von Kryptowährungen, die jeweiligen Ausgaben der Ausgaben-Untergruppe zugeordnet sind, durch einen Computer als intern übertragene Kryptowährungen oder extern übertragene Kryptowährungen auf Grundlage einer Korrelation zwischen den Benutzerinformationen und Eingaben der einen oder mehreren Transaktionen, wobei die extern übertragenen Kryptowährungen von einem Dritten an den Benutzer übertragen werden, wobei die intern übertragenen Kryptowährungen von dem Benutzer und an den Benutzer übertragen werden;
erhalten eines ersten Anschaffungswerts einer ersten extern übertragenen Kryptowährung, die einer ersten Ausgabe einer ersten Transaktion zugeordnet ist, wobei die Ausgaben-Untergruppe die erste Ausgabe umfasst;
identifizieren einer zweiten Transaktion in der einen oder den mehreren Transaktionen des Benutzers, die eine erste Eingabe aufweist, die der ersten Ausgabe der ersten Transaktion entspricht, wobei die erste extern übertragene Kryptowährung als die erste Eingabe der zweiten Transaktion verwendet wird;
berechnen eines zweiten Anschaffungswerts einer Ausgabe der zweiten Transaktion, die den Benutzerinformationen zugeordnet ist, um proportional dem ersten Anschaffungswert zu entsprechen; und
aufzeichnen einer Aufzeichnung einer aktuell gehaltenen Kryptowährung in der Datenbank, der eine nicht ausgegebene Transaktionsausgabe- (UTXO-) Kennung der zweiten Transaktion und des zweiten Anschaffungswerts umfasst;
erhalten einer Angabe einer neuen Transaktion, die durch den Benutzer initiiert wurde; und
unter Verwendung der Datenbank, um einen Anschaffungswert einer Ausgabe der neuen Transaktion, die dem Benutzer gehört, zu bestimmen, wird der Anschaffungswert basierend auf Anschaffungswerten von Eingaben der neuen Transaktion, die in der Datenbank erfasst sind, bestimmt, wobei eine Eingabe der neuen Kryptowährungstransaktion mindestens eine nicht ausgegebene Transaktionsausgabe- (UTXO-) Kennung umfasst, wobei die Bestimmung des Anschaffungswerts der Ausgabe der neuen Transaktion durchgeführt wird, ohne die Blockchain-Historie zu durchlaufen.

13. Das Produkt nach Anspruch 12, bei dem die Programmanweisungen, wenn sie von einem Prozessor gelesen werden, den Prozessor veranlassen, Kryptowährungsaktivitäten des Benutzers zu überwachen und beim Erkennen einer neuen Transaktion, die von dem Benutzer initiiert wird, einen Anschaffungswert einer Ausgabe der neuen Transaktion, die dem Benutzer gehört, auf Grundlage bestimmter Anschaffungswerte von Eingaben in die neue Transaktion zu bestimmen.

14. Ein System, das einen Prozessor und einen gekoppelten Speicher umfasst, wobei der Prozessor angepasst wird zum Durchführen folgender Vorgänge:
erhalten von Benutzerinformationen, in denen eine oder mehrere Adressen eines Benutzers angegeben ist bzw. sind, wobei die eine oder mehreren Adressen mindestens einen öffentlichen kryptografischen Schlüssel umfassen, der durch eine Software-Wallet des Benutzers erzeugt wird und der als Ausgabe einer Kryptowährungstransaktion verwendet wird, die in einem öffentlichen Blockchain-System aufgezeichnet ist;
erzeugen einer Datenbank zur spezifischen Identifizierung von Kryptowährungen des Benutzers, die Kryptowährungen des Benutzers werden innerhalb des öffentlichen Blockchain-Systems aufgezeichnet, die Datenbank bildet eine parallele Schicht zum öffentlichen Blockchain-System, die Datenbank ist unabhängig von einem Protokoll, das vom öffentlichen Blockchain-System verwendet wird, in der Datenbank werden Datensätze gespeichert, die die Kryptowährungen des Benutzers identifizieren, sowie zusätzliche Informationen, die nicht direkt im öffentlichen Blockchain-System aufgezeichnet sind; dieses Erzeugen erfolgt durch Vorwärtsverfolgen aufgezeichneter Kryptowährungstransaktionen, die im öffentlichen Blockchain-System aufgezeichnet sind, wobei das Vorwärtsverfolgen Folgendes umfasst;
erkennen einer oder mehrerer Transaktionen des Benutzers in einer Blockchain-Historie auf Grundlage der Benutzerinformationen, wobei die Blockchain-Historie in einer oder mehreren Übertragungen von einem Remote-Server aus erhalten wird, wobei der Remote-Server Teil des öffentlichen Blockchain-Systems ist;
identifizieren einer Ausgaben-Untergruppe in der einen oder den mehreren Transaktionen des Benutzers, wobei jede Ausgabe der Ausgaben-Untergruppe einer der einen oder der mehreren Adressen des Benutzers zugeordnet ist;
klassifizieren von Kryptowährungen, die jeweiligen Ausgaben der Ausgaben-Untergruppe zugeordnet sind, als intern übertragene Kryptowährungen oder extern übertragene Kryptowährungen durch einen Computer auf Grundlage einer Korrelation zwischen den Benutzerinformationen und Eingaben der einen oder mehreren Transaktionen, wobei die extern übertragenen Kryptowährungen von einem Dritten an den Benutzer übertragen werden, wobei die intern übertragenen Kryptowährungen von dem Benutzer und an den Benutzer übertragen werden;
erhalten eines ersten Anschaffungswerts einer ersten extern übertragenen Kryptowährung, die einer ersten Ausgabe einer ersten Transaktion zugeordnet ist, wobei die Ausgaben-Untergruppe die erste Ausgabe umfasst; das Identifizieren einer zweiten Transaktion in der einen oder den mehreren Transaktionen des Benutzers, die eine erste Eingabe aufweist, die der ersten Ausgabe der ersten Transaktion entspricht, wobei die erste extern übertragene Kryptowährung als die erste Eingabe der zweiten Transaktion verwendet wird;
berechnen eines zweiten Anschaffungswerts einer Ausgabe der zweiten Transaktion, die den Benutzerinformationen zugeordnet ist, um proportional der ersten Anschaffungswerteintragung in der Datenbank eine Aufzeichnung einer aktuell gehaltenen Kryptowährung vorzunehmen, die eine nicht ausgegebene Transaktionsausgabe- (UTXO-) Kennung der zweiten Transaktion umfasst, sowie des zweiten Anschaffungswerts;
erhalten einer Angabe einer neuen Transaktion, die durch den Benutzer initiiert wurde; und
unter Verwendung der Datenbank, um einen Anschaffungswert einer Ausgabe der neuen Transaktion, die dem Benutzer gehört, zu bestimmen, wird der Anschaffungswert basierend auf Anschaffungswerten von Eingaben der neuen Transaktion, die in der Datenbank erfasst sind, bestimmt, wobei eine Eingabe der neuen Kryptowährungstransaktion mindestens eine nicht ausgegebene Transaktionsausgabe- (UTXO-) Kennung umfasst, wobei die Bestimmung des Anschaffungswerts der Ausgabe der neuen Transaktion durchgeführt wird, ohne die Blockchain-Historie zu durchlaufen.

## Revendications

1. Un procédé mis en œuvre par ordinateur comprenant les étapes suivantes :
obtention des informations de l'utilisateur indiquant une ou plusieurs adresses d'un utilisateur, la ou les adresses étant **caractérisées par** au moins une clé de chiffrement publique qui est générée par un portefeuille logiciel de l'utilisateur et qui est utilisée comme sortie d'une transaction de cryptomonnaie enregistrée dans un système de chaîne de blocs (Blockchain) publique ;
génération d'une base de données pour l'identification spécifique des cryptomonnaies de l'utilisateur, les cryptomonnaies de l'utilisateur sont enregistrées dans le système de chaîne de blocs publique, la base de données forme une couche parallèle au système de chaîne de blocs publique, la base de données est indépendante d'un protocole utilisé par le système de chaîne de blocs publique, la base de données conservant des informations identifiant les cryptomonnaies de l'utilisateur et des informations supplémentaires non directement enregistrées dans le système de chaîne de blocs publique, ladite génération est effectuée par un suivi en aval des transactions de cryptomonnaie enregistrées dans le système de chaîne de blocs publique, ledit suivi en aval comprenant :
étection d'une ou plusieurs transactions de l'utilisateur dans un historique de la chaîne de blocs sur la base des informations de l'utilisateur, l'historique de la chaîne de blocs étant obtenu par une ou plusieurs transmissions d'un serveur distant, le serveur distant faisant partie du système de chaîne de blocs publique ;
identification, dans une ou plusieurs transactions de l'utilisateur, d'un sous-groupe de sorties, chaque sortie du sous-groupe de sorties étant associée à l'une ou plusieurs des adresses de l'utilisateur ;
classification, par un ordinateur, des cryptomonnaies associées aux sorties respectives du sous-groupe de sorties comme transfert interne de cryptomonnaies ou transfert externe de cryptomonnaies sur la base d'une corrélation entre les informations de l'utilisateur et les entrées d'une ou de plusieurs transactions, le transfert externe de cryptomonnaies correspondant à un transfert d'un tiers à l'utilisateur, le transfert interne de cryptomonnaies correspondant à un transfert de l'utilisateur à l'utilisateur ;
obtention d'une première valeur de coût du premier transfert externe de cryptomonnaies associée à une première sortie d'une première transaction, le sous-groupe de sorties comprenant la première sortie ;
identification, dans une ou plusieurs transactions de l'utilisateur, d'une seconde transaction qui a une première entrée correspondant à la première sortie de la première transaction, le premier transfert externe de cryptomonnaies étant utilisé comme première entrée de la seconde transaction ;
calcul d'une seconde valeur de coût d'une sortie de la seconde transaction associée aux informations de l'utilisateur pour correspondre proportionnellement à la première valeur de coût ; et
enregistrement dans la base de données d'informations indiquant les cryptomonnaies actuellement détenues qui comprennent un identifiant de sortie de transaction non dépensée (UTXO) de la deuxième transaction et la deuxième valeur de coût ;
obtention d'une indication d'une nouvelle transaction initiée par l'utilisateur ;
et
utilisation de la base de données pour déterminer une valeur de coût d'une sortie de la nouvelle transaction de l'utilisateur, la valeur de coût est déterminée sur la base des valeurs de coût des entrées de la nouvelle transaction qui sont enregistrées dans la base de données, une entrée de la nouvelle transaction comprenant au moins un identifiant de sortie de transaction non dépensée (UTXO), la détermination de la valeur de coût de la sortie de la nouvelle transaction étant effectuée sans parcourir l'historique de la chaîne de blocs.

2. Le procédé selon la revendication 1 comprenant la détermination d'une valeur de coût de la première entrée qui est identique à la première valeur de coût.

3. Le procédé selon la revendication 1, **caractérisé par le fait que** ladite obtention de l'indication de la nouvelle transaction comprend la surveillance des activités de cryptomonnaies de l'utilisateur.

4. Le procédé selon la revendication 1 comprenant la surveillance des activités de cryptomonnaies de l'utilisateur et, lors de la détection d'une nouvelle transaction initiée par le tiers, la détermination d'une valeur de coût d'une sortie de la nouvelle transaction de l'utilisateur sur la base d'un horodatage de la nouvelle transaction.

5. Le procédé selon la revendication 1, comprenant la classification des cryptomonnaies associée à une sortie d'une transaction parmi une ou plusieurs transactions devant être des transferts internes de cryptomonnaies lorsque les entrées de la transaction sont associées aux informations de l'utilisateur, et, lors de la réception d'une nouvelle indication selon laquelle la sortie de la transaction parmi une ou plusieurs transactions n'est pas celle de l'utilisateur, la reclassification des transactions qui sont associées à la transaction parmi une ou plusieurs transactions sur la base de la nouvelle indication.

6. Le procédé selon la revendication 1, comprenant la classification des cryptomonnaies associées à une sortie d'une transaction parmi une ou plusieurs transactions devant être des transferts externes de cryptomonnaies lorsqu'aucune entrée de la transaction n'est associée à l'une ou plusieurs des adresses de l'utilisateur, et, lors de la réception d'une nouvelle indication selon laquelle la sortie de la transaction parmi une ou plusieurs transactions est celle de l'utilisateur, la reclassification des transactions qui sont associées à la transaction parmi une ou plusieurs transactions sur la base de la nouvelle indication.

7. Le procédé selon la revendication 1, **caractérisé par le fait que** ladite obtention de la première valeur de coût est basée sur un devis provenant d'un serveur délivrant des devis qui prend en compte un horodatage de la première transaction ou sur une entrée de l'utilisateur qui indique un paiement réel.

8. Le procédé selon la revendication 1, **caractérisé par le fait que** les informations de l'utilisateur indiquent également au moins l'un du groupe constitué par : un identifiant de transaction associé à l'utilisateur, une ou plusieurs entrées ou sorties identifiées d'une transaction de l'utilisateur, des données d'échange et une adresse de portefeuille.

9. Le procédé selon la revendication 1 comprenant la conservation de chaque cryptomonnaie de l'utilisateur dans au moins une base de données avec les valeurs de coût déterminées correspondantes.

10. Le procédé selon la revendication 1, comprenant la classification de chacune des transactions de l'utilisateur comme une transaction interne, une transaction de dépôt, une transaction de retrait, une transaction impliquant une monnaie fiat, une transaction de pair à pair (P2P) (peer to peer), une transaction d'échange à échange (Ex-2-Ex), une transaction de cryptomonnaie alternative en cryptomonnaie alternative (Alt-2-Alt) ou une transaction de minage (mining).

11. Le procédé selon la revendication 1 comprenant, lorsqu'il est déterminé que certaines informations de l'utilisateur sont manquantes, une demande à l'utilisateur de fournir des informations supplémentaires pour mettre à jour ses informations afin d'inclure les informations supplémentaires.

12. Un produit de programme d'ordinateur comprenant un support de stockage non transitoire lisible par ordinateur contenant des instructions du programme, ces instructions du programme, lorsqu'elles sont lues par un processeur, amènent le processeur à effectuer :
obtention des informations de l'utilisateur indiquant une ou plusieurs adresses d'un utilisateur, la ou les adresses étant **caractérisées par** au moins une clé de chiffrement publique qui est générée par un portefeuille logiciel de l'utilisateur et qui est utilisée comme sortie d'une transaction de cryptomonnaie enregistrée dans un système de chaîne de blocs publique ;
génération d'une base de données pour l'identification spécifique des cryptomonnaies de l'utilisateur, les cryptomonnaies de l'utilisateur sont enregistrées dans le système de chaîne de blocs publique, la base de données forme une couche parallèle au système de chaîne de blocs publique, la base de données est indépendante d'un protocole utilisé par le système de chaîne de blocs publique, la base de données conservant des informations identifiant les cryptomonnaies de l'utilisateur et des informations supplémentaires non directement enregistrées dans le système de chaîne de blocs publique, ladite génération est effectuée par un suivi en aval des transactions de cryptomonnaie enregistrées dans le système de chaîne de blocs publique, ledit suivi en aval comprenant :
détection d'une ou plusieurs transactions de l'utilisateur dans un historique de la chaîne de blocs sur la base des informations de l'utilisateur, l'historique de la chaîne de blocs étant obtenu par une ou plusieurs transmissions d'un serveur distant, le serveur distant faisant partie du système de chaîne de blocs publique ;
identification, dans une ou plusieurs transactions de l'utilisateur, d'un sous-groupe de sorties, chaque sortie du sous-groupe de sorties étant associée à l'une ou plusieurs des adresses de l'utilisateur ;
classification, par un ordinateur, des cryptomonnaies associées aux sorties respectives du sous-groupe de sorties comme transfert interne de cryptomonnaies ou transfert externe de cryptomonnaies sur la base d'une corrélation entre les informations de l'utilisateur et les entrées d'une ou de plusieurs transactions, le transfert externe de cryptomonnaies correspondant à un transfert d'un tiers à l'utilisateur, le transfert interne de cryptomonnaies correspondant à un transfert de l'utilisateur à l'utilisateur ;
obtention d'une première valeur de coût du premier transfert externe de cryptomonnaies associée à une première sortie d'une première transaction, le sous-groupe de sorties comprenant la première sortie ;
identification, dans une ou plusieurs transactions de l'utilisateur, d'une seconde transaction qui a une première entrée correspondant à la première sortie de la première transaction, le premier transfert externe de cryptomonnaies étant utilisé comme première entrée de la seconde transaction ;
calcul d'une seconde valeur de coût d'une sortie de la seconde transaction associée aux informations de l'utilisateur pour correspondre proportionnellement à la première valeur de coût ; et
enregistrement dans la base de données d'informations indiquant les cryptomonnaies actuellement détenues qui comprennent un identifiant de sortie de transaction non dépensée (UTXO) de la deuxième transaction et la deuxième valeur de coût ;
obtention d'une indication d'une nouvelle transaction initiée par l'utilisateur ;
et
utilisation de la base de données pour déterminer une valeur de coût d'une sortie de la nouvelle transaction de l'utilisateur, la valeur de coût est déterminée sur la base des valeurs de coût des entrées de la nouvelle transaction qui sont enregistrées dans la base de données, une entrée de la nouvelle transaction de cryptomonnaie comprenant au moins un identifiant de sortie de transaction non dépensée (UTXO), la détermination de la valeur de coût de la sortie de la nouvelle transaction étant effectuée sans parcourir l'historique de la chaîne de blocs.

13. Le produit selon la revendication 12, **caractérisé par le fait que** les instructions du programme, lorsqu'elles sont lues par un processeur, amènent le processeur à surveiller les activités de cryptomonnaie de l'utilisateur et, lors de la détection d'une nouvelle transaction initiée par l'utilisateur, à déterminer une valeur de coût d'une sortie de la nouvelle transaction de l'utilisateur sur la base de valeurs de coût déterminées des entrées de la nouvelle transaction.

14. Un système comprenant un processeur et une mémoire couplée, le processeur étant adapté pour permettre :
obtention des informations de l'utilisateur indiquant une ou plusieurs adresses d'un utilisateur, la ou les adresses étant **caractérisées par** au moins une clé de chiffrement publique qui est générée par un portefeuille logiciel de l'utilisateur et qui est utilisée comme sortie d'une transaction de cryptomonnaie enregistrée dans un système de chaîne de blocs publique ;
génération d'une base de données pour l'identification spécifique des cryptomonnaies de l'utilisateur, les cryptomonnaies de l'utilisateur sont enregistrées dans le système de chaîne de blocs publique, la base de données forme une couche parallèle au système de chaîne de blocs publique, la base de données est indépendante d'un protocole utilisé par le système de chaîne de blocs publique, la base de données conservant des informations identifiant les cryptomonnaies de l'utilisateur et des informations supplémentaires non directement enregistrées dans le système de chaîne de blocs publique, ladite génération est effectuée par un suivi en aval des transactions de cryptomonnaie enregistrées dans le système de chaîne de blocs publique, ledit suivi en aval comprenant :
détection d'une ou plusieurs transactions de l'utilisateur dans un historique de la chaîne de blocs sur la base des informations de l'utilisateur, l'historique de la chaîne de blocs étant obtenu par une ou plusieurs transmissions d'un serveur distant, le serveur distant faisant partie du système de chaîne de blocs publique ;
identification, dans une ou plusieurs transactions de l'utilisateur, d'un sous-groupe de sorties, chaque sortie du sous-groupe de sorties étant associée à l'une ou plusieurs des adresses de l'utilisateur ;
classification, par un ordinateur, des cryptomonnaies associées aux sorties respectives du sous-groupe de sorties comme transfert interne de cryptomonnaies ou transfert externe de cryptomonnaies sur la base d'une corrélation entre les informations de l'utilisateur et les entrées d'une ou de plusieurs transactions, le transfert externe de cryptomonnaies correspondant à un transfert d'un tiers à l'utilisateur, le transfert interne de cryptomonnaies correspondant à un transfert de l'utilisateur à l'utilisateur ;
obtention d'une première valeur de coût du premier transfert externe de cryptomonnaies associée à une première sortie d'une première transaction, le sous-groupe de sorties comprenant la première sortie ;
l'identification, dans une ou plusieurs transactions de l'utilisateur, d'une seconde transaction qui a une première entrée correspondant à la première sortie de la première transaction, le premier transfert externe de cryptomonnaies étant utilisé comme première entrée de la seconde transaction ;
calcul d'une seconde valeur de coût d'une sortie de la seconde transaction qui est associée aux informations de l'utilisateur pour correspondre proportionnellement à la première valeur de coût en enregistrant dans la base de données les informations sur les cryptomonnaies actuellement détenues qui comprennent un identifiant de sortie de transaction non dépensée (UTXO) de la seconde transaction et sur la seconde valeur de coût ;
obtention d'une indication d'une nouvelle transaction initiée par l'utilisateur ; et
utilisation de la base de données pour déterminer une valeur de coût d'une sortie de la nouvelle transaction de l'utilisateur, la valeur de coût est déterminée sur la base des valeurs de coût des entrées de la nouvelle transaction qui sont enregistrées dans la base de données, une entrée de la nouvelle transaction comprenant au moins un identifiant de sortie de transaction non dépensée (UTXO), la détermination de la valeur de coût de la sortie de la nouvelle transaction étant effectuée sans parcourir l'historique de la chaîne de blocs.
